# EUROPEAN PATENT APPLICATION

(11) **EP 4 787 908 A1**
(43) Date of publication of application: **05.08.2026**
(21) Application number: 24871844.7
(22) Date of filing: 11.09.2024
(51) Int. Cl.: H04W 4/38, H04W 4/021, H04W 64/00, H04W 88/18

(54) **COMMUNICATION SYSTEM**

(30) Priority: 26.09.2023 JP 2023163132
(71) Applicant: Mitsubishi Electric Corporation, Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Mewburn Ellis LLP
(86) International application number: PCT/JP2024/032461
(87) International publication number: WO 2025/070047

(57) **Abstract**

A communication system includes a base station supporting a fifth generation radio access system, and a communication terminal connected to the base station, in which, in response to a sensing request from an external apparatus, nodes related to sensing are derived from at least one of the base station and the communication terminal, based on information related to a sensing area, and a transmission node for sensing configured to transmit a sensing resource and a reception node for sensing configured to receive the sensing resource are determined among the derived nodes.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). The NR system has been studied, based on the LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

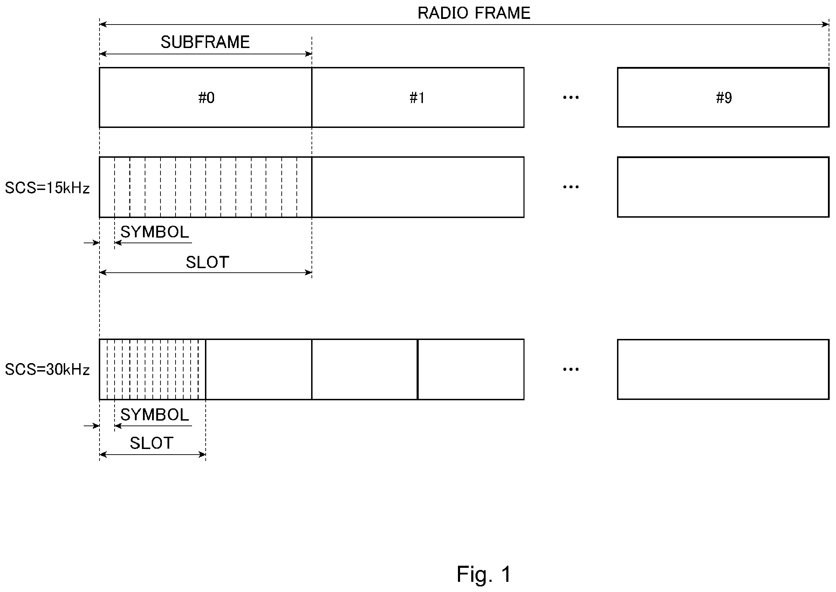

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, that is, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with predetermined periodicity for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described later, resource allocation information of a paging channel (PCH) being one of transport channels to be described later, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described later. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, that is, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, that is, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, that is, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described later is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides Non-Access Stratum (NAS) mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (Side Link, SL) communication (also referred to as PC5 communication) both in an Evolved Packet System (EPS) and a 5G core system to be described later is studied (see NPLs 1, 2, and 26 to 28). In SL communication, communication is performed between the terminals. Examples of the services using SL communication include a vehicle-to-everything (V2X) service, a proximity-based service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmission power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

For mobile communication systems, some new technologies are proposed. For example, introduction of a technology that combines sensing (detection of an object and the like, using radio waves) and communication is proposed (refer to NPLs 30 and 31).

### Citation List

### Non Patent Literature

[NPL 1] 3GPP TS 36.300 V17.5.0
[NPL 2] 3GPP TS 38.300 V17.5.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V18.2.2
[NPL 11] 3GPP TS 38.211 V17.5.0
[NPL 12] 3GPP TS 38.212 V17.5.0
[NPL 13] 3GPP TS 38.213 V17.6.0
[NPL 14] 3GPP TS 38.214 V17.6.0
[NPL 15] 3GPP TS 38.321 V17.5.0
[NPL 16] 3GPP TS 38.322 V17.3.0
[NPL 17] 3GPP TS 38.323 V17.5.0
[NPL 18] 3GPP TS 37.324 V17.0.0
[NPL 19] 3GPP TS 38.331 V17.5.0
[NPL 20] 3GPP TS 38.401 V17.5.0
[NPL 21] 3GPP TS 38.413 V17.5.0
[NPL 22] 3GPP TS 37.340 V17.5.0
[NPL 23] 3GPP TS 38.423 V17.5.0
[NPL 24] 3GPP TS 38.305 V17.5.0
[NPL 25] 3GPP TS 23.273 V18.2.0
[NPL 26] 3GPP TR 23.703 V12.0.0
[NPL 27] 3GPP TS 23.287 V18.0.0
[NPL 28] 3GPP TS 23.303 V17.1.0
[NPL 29] 3GPP TS 38.340 V17.5.0
[NPL 30] 3GPP TR 22.837 V19.0.0
[NPL 31] 3GPP RWS-230250

### SUMMARY

### Technical Problem

It is proposed to perform detection of a target by sensing as well as communication with a UE in a mobile communication system (refer to NPLs 30 and 31). Examples of the target of the sensing include objects that are not a UE (that do not include a UE), such as an invader, an obstacle, a river, and the atmosphere. A location management function (refer to NPLs 24 and 25) is introduced into mobile communication systems. However, in the location management function, a location management target is a UE. Hence, the location management function cannot be simply applied to sensing. A concrete method necessary for executing sensing in a mobile communication system is not disclosed and is not clear. For this reason, a problem that sensing processing cannot be executed in a mobile communication system occurs.

In view of the problems, one of the objects of the present disclosure is to implement sensing processing as well as communication with a UE in a communication system.

### Solution to Problem

A communication system according to the present disclosure includes: a base station supporting a fifth generation radio access system; and a communication terminal connected to the base station. In response to a sensing request from an external apparatus, nodes related to sensing are derived from at least one of the base station and the communication terminal, based on information related to a sensing area. Among derived nodes, a transmission node for sensing configured to transmit a sensing resource and a reception node for sensing configured to receive the sensing resource are determined.

### Advantageous Effects of Invention

According to the present disclosure, it is possible to implement sensing processing as well as communication with a UE in a communication system.

The objects, features, aspects and advantages of the present disclosure will become more apparent from the following detailed description and the accompanying drawings.

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a conceptual diagram of sensing in a case where a base station is a transmission node of a sensing resource and UEs are reception nodes of the sensing resource;
Fig. 12 is a conceptual diagram of sensing in a case where a base station is a transmission node of a sensing resource and base stations are reception nodes of the sensing resource;
Fig. 13 is a conceptual diagram of sensing in a case where a UE is a transmission node of a sensing resource and base stations are reception nodes of the sensing resource;
Fig. 14 is a conceptual diagram of sensing in a case where a UE is a transmission node of a sensing resource and UEs are reception nodes of the sensing resource;
Fig. 15 is a diagram illustrating a sequence example of sensing processing according to a first embodiment;
Fig. 16 is a diagram illustrating the sequence example of the sensing processing according to the first embodiment;
Fig. 17 is a diagram illustrating another sequence example of the sensing processing, according to a second embodiment;
Fig. 18 is a diagram illustrating another sequence example of the sensing processing, according to the second embodiment;
Fig. 19 is a diagram illustrating another sequence example of the sensing processing, according to a third embodiment;
Fig. 20 is a diagram illustrating another sequence example of the sensing processing, according to a fourth embodiment;
Fig. 21 is a diagram illustrating another sequence example of the sensing processing, according to a fifth embodiment; and
Fig. 22 is a diagram illustrating another sequence example of the sensing processing, according to the fifth embodiment.

### DETAILED DESCRIPTION

### First Embodiment

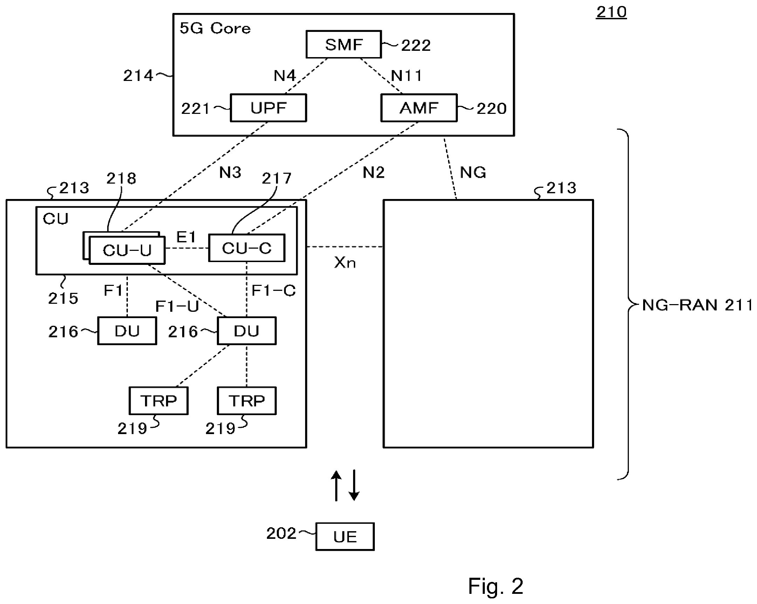

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane, a C-Plane, or a CP), the SDAP is used in a user plane (which may be hereinafter also referred to as a U plane, a U-Plane, or a UP), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

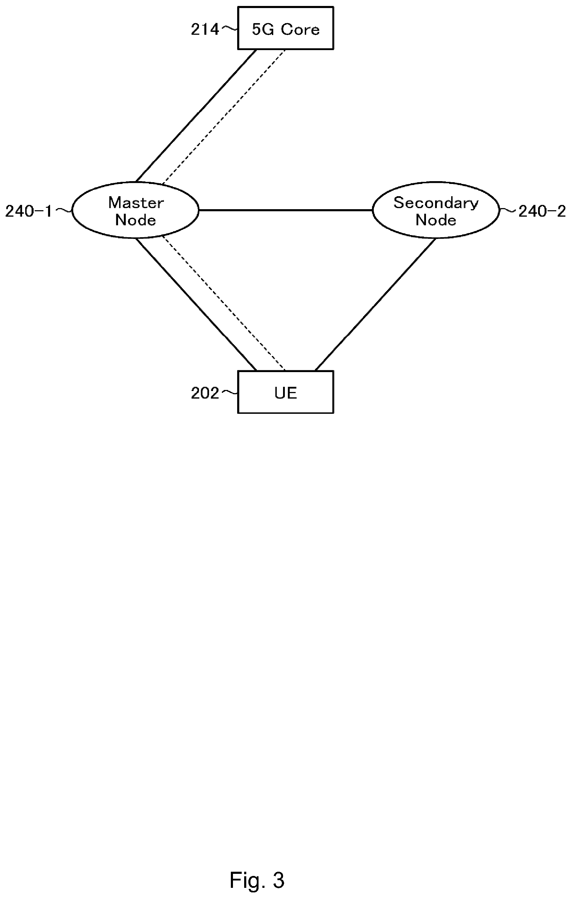

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

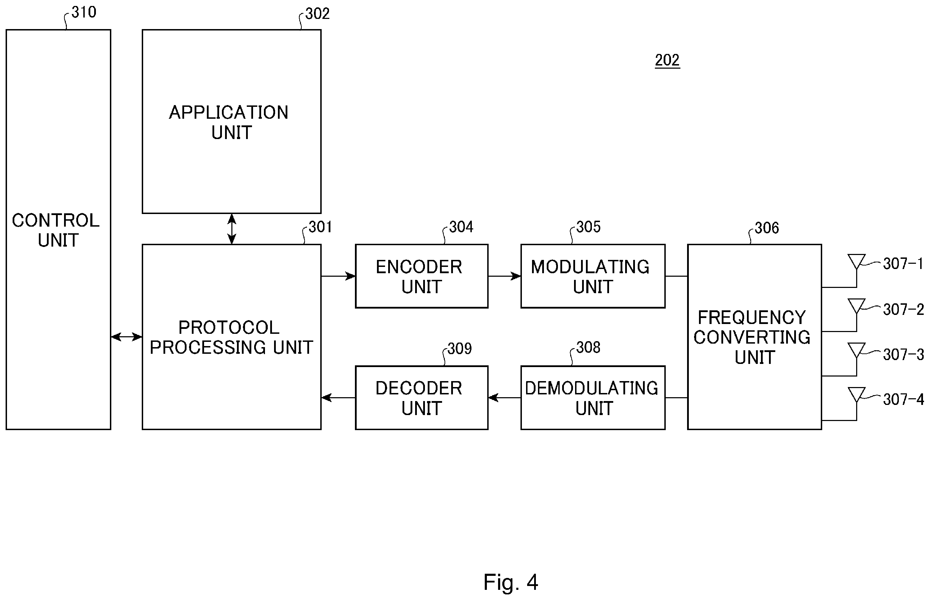

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

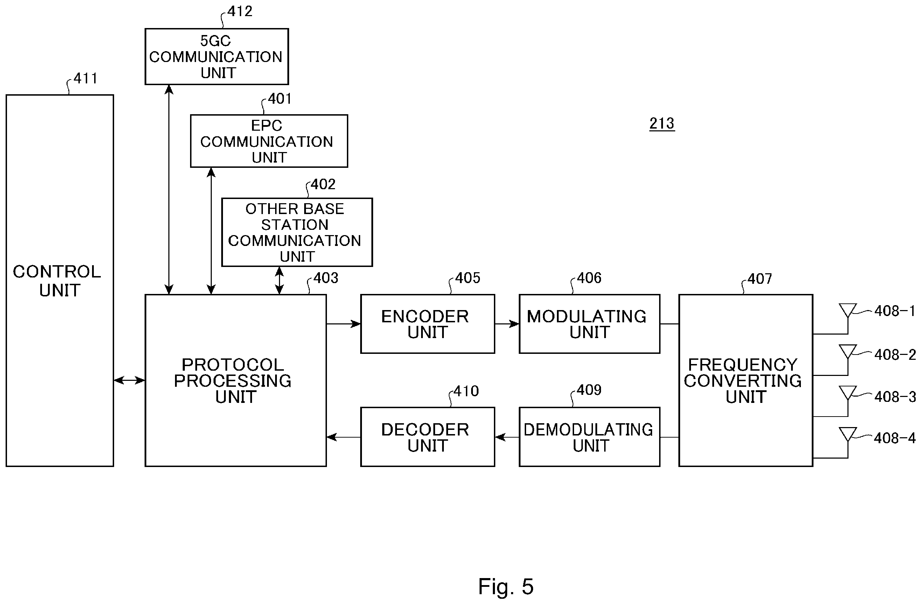

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

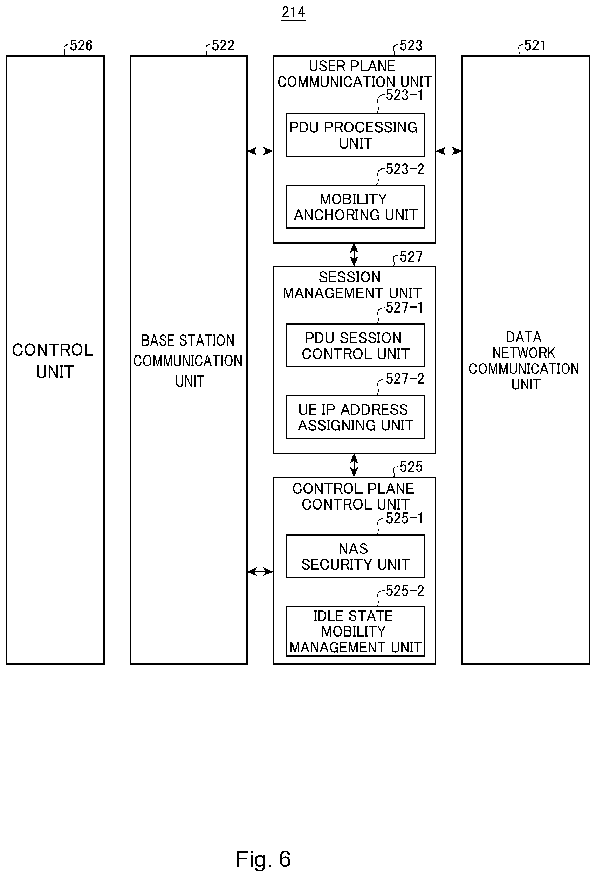

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane communication unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

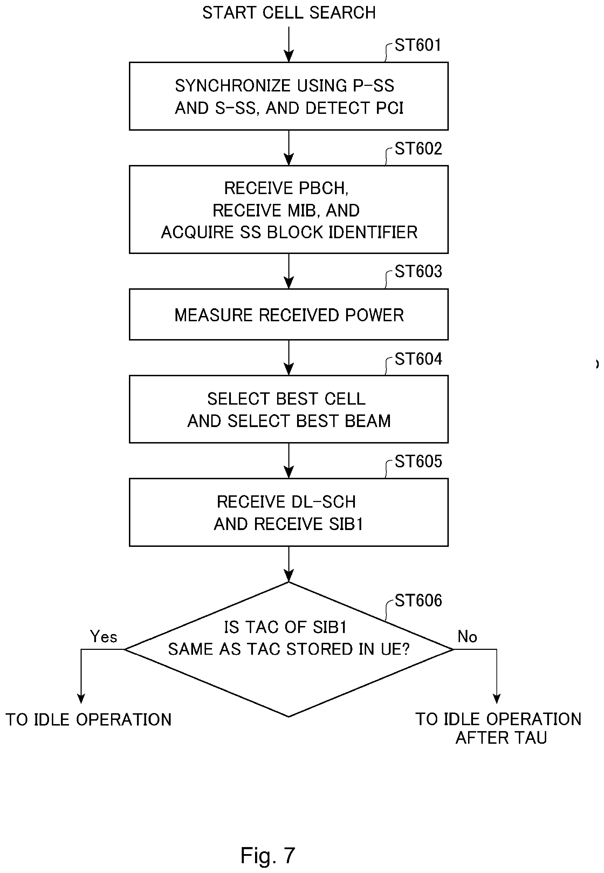

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, that is, the best cell, out of the one or more cells detected up to Step ST603. The communication terminal selects a beam having the best received quality, for example, a beam having the highest received power of the SS block, that is, the best beam. In selection of the best beam, for example, received power of the SS block of each SS block identifier is used.

Next, in Step ST605, the communication terminal receives a DL-SCH based on the scheduling information of the SIB1 included in the MIB, and obtains the SIB1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network apparatus") updates the tracking area list, based on an identification number (a UE-ID or the like) of the communication terminal transmitted from the communication terminal together with a TAU request signal. The core network apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, that is, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

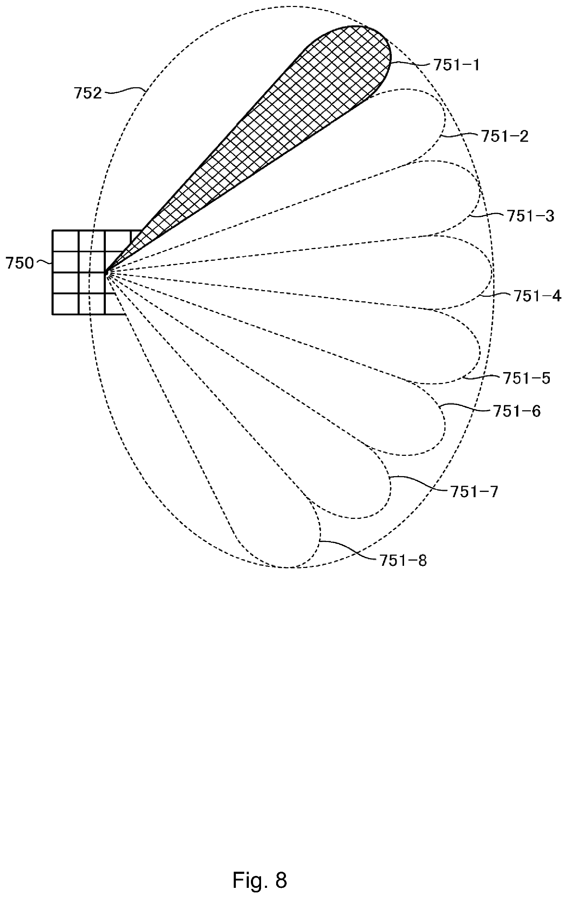

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, that is, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

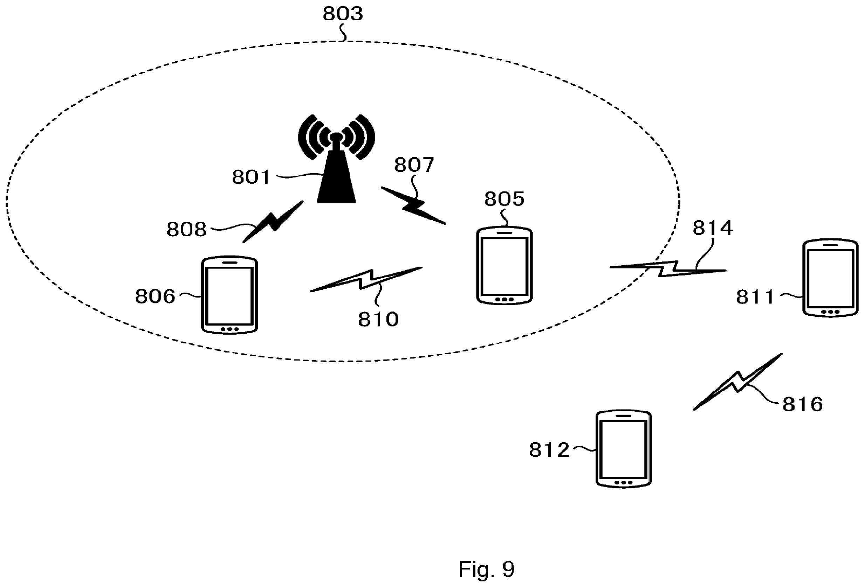

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

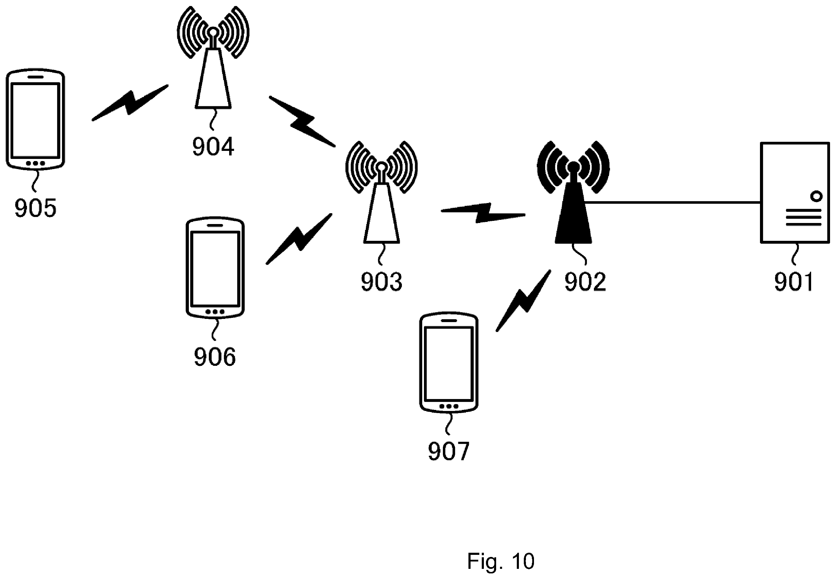

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

It is proposed to perform detection of targets by sensing as well as communication with UEs in 3GPP mobile communication systems (refer to NPLs 30 and 31). Since sensing targets also include those that are not UEs, the location management function introduced to a 3GPP mobile communication system cannot be applied simply to sensing. A concrete method for executing sensing in a mobile communication system is needed.

In the present embodiment, a method for solving such a problem will be disclosed.

A function (which may be a node or an entity) having a function of managing sensing is provided. For example, this is referred to as a sensing function (SF). Examples of sensing management include management of processing related to sensing such as sensing request, sensing configuration, and sensing end. The SF may have a function of a server for sensing. By providing such a function having the function of managing sensing, this enables management of sensing processing as a whole, which can reduce complexity of the sensing processing.

The SF may be provided separately from other functions in an NW. This can reduce complexity of processing and reduce malfunctions. As another method, the SF may be included in another function in the NW. This can facilitate cooperation with the other function, which can reduce a signaling amount.

A gateway function for sensing may be provided. The gateway function for sensing may be a gateway function from an external apparatus being a sensing client (subject requesting sensing) to a 3GPP mobile communication system, for example. For example, the gateway function for sensing may be a routing function for sensing processing. A gateway for sensing may be provided. The gateway for sensing may have a gateway function for sensing. By providing the gateway function for sensing, the external apparatus can easily execute sensing processing for the 3GPP mobile communication system.

A gateway for location services (LCS) (for example, a gateway mobile location centre (GMLC)) may have the gateway function for sensing. By using the gateway for LCS, coordination processing of sensing processing and location management processing can be facilitated, for example. A common gateway having a gateway function of different processing may be provided. The common gateway may have a gateway function for sensing. By the common gateway having the gateway function for sensing, coordination processing of different processing and sensing processing can be facilitated, for example.

In the gateway for sensing, a PDU session anchor (PSA) UPF may have a gateway function for sensing. For example, this may be applied when a sensing result is transmitted in UP. Sensing processing can be facilitated. Reliability of sensing processing can be improved.

A method of initiating sensing processing will be disclosed. An external apparatus may initiate the sensing processing. The external apparatus transmits a sensing request to an SF. The external apparatus may transmit the sensing request via a gateway for sensing (referred to simply as a gateway in some cases below). The external apparatus transmits a sensing request to a gateway. The gateway transmits a sensing request to an AMF. The AMF transmits a sensing request to an SF. By receiving a sensing request, the SF can execute the sensing processing.

Nine examples of information included in the sensing request will be disclosed below.
(1) Information related to a sensing target
(2) Information related to an area for sensing
(3) Information related to a time for sensing
(4) Information related to a sensing result
(5) Information related to accuracy
(6) Information related to quality of service (QoS) and quality of experience (QoE)
(7) Information identifying a sensing request
(8) Information related to service
(9) Combination of (1) to (8)

Information (1) related to a sensing target may be information on what is the target of sensing, for example. The sensing target may be information related to an area, such as a certain area or a certain direction. This information may be combined with information (2) related to a sensing area. For example, the information related to a sensing target may be information related to an invader, an obstacle, a river, the atmosphere, or the like. For example, a sensing method may be determined in the SF, and these pieces of information can be used for the determination.

Information (2) related to an area for sensing may be information related to a certain area, a certain direction, a certain base station neighborhood, a certain UE neighborhood, between a certain base station and a certain UE, between certain base stations, between certain UEs, or the like, for example. These pieces of information may be one or more than one. The information related to a certain area may be latitude and longitude, for example. The information related to a certain area may include altitude. The information related to a certain direction may be a point of the compass from a certain site or a direction from a certain site, for example. The information related to a certain base station neighborhood may be information for identifying a corresponding base station, for example. For example, the information related to a certain base station neighborhood may be an identifier for identifying a corresponding base station. This is not limited to a base station and may be a DU, a TRP, or a cell. Alternatively, this may be an antenna. The information related to a certain UE neighborhood may be information for identifying a corresponding UE, for example. For example, the information related to a certain UE neighborhood may be an identifier for identifying a corresponding UE. For example, which area to be subjected to sensing may be determined in the SF, and these pieces of information can be used for the determination.

Information (3) related to a time for sensing may be a sensing start time, a sensing end time, a sensing period, periodicity, or the like, for example. Information related to a time for sensing may be information related to a time planned with sensing. For example, start and end of the sensing processing may be determined in the SF, and these pieces of information can be used for the determination.

Information (4) related to a sensing result may be information indicating what kind of sensing result is needed, for example. The information related to a sensing result may be a three-dimensional object detection result or a six-dimensional (three-dimensional coordinates + three-axis directions) object detection result of a target, or the shape, size, position, speed, moving direction, water level, humidity, air pressure, heartbeat, or the like of an object, for example. The information related to a sensing result may be time information, for example. The time information may be information indicating a time at which a target is detected, a detection period, a time at which a target is no longer detected, or the like, for example. For example, a sensing result may be derived in the SF, and these pieces of information can be used for the derivation.

Information (5) related to accuracy may be information related to accuracy of a sensing result. The information related to accuracy may be accuracy of each piece of information related to a sensing result disclosed in (4), for example. For example, a sensing method may be determined in the SF, and these pieces of information can be used for the determination.

Information (6) related to QoS and QoE may be information related to the QoS and the QoE required for sensing. The information related to QoS and QoE may be the degree of reliability of a sensing result, accuracy (which may be the degree of certainty), resolution, sensing delay, the refreshing rate of a sensing result, a missing detection rate, a false alarm rate, or the like, for example. The information related to QoS and QoE may be a key performance indicator (KPI) required for sensing, for example. For example, a sensing method may be determined in the SF, and these pieces of information can be used for the determination.

Information (7) identifying a sensing request may be an identifier for identifying a sensing request, for example. A plurality of sensing requests may be executed. By providing the information identifying a sensing request, it is possible to identify a corresponding sensing request when a plurality of sensing requests are executed, for example. A maximum value may be provided for the number of sensing requests. By providing the maximum value, enormous complexity of sensing processing can be prevented. For example, a sensing result may include information identifying the sensing request. With this, for which sensing request the sensing result is can be identified.

Information (8) related to service may be information related to service (which may be an application) for which sensing is performed, for example. Information (8) related to service may be information for identifying service, for example. For example, the information related to service may be identification information of the service. Information (8) related to service may be information related to service for performing a sensing request, for example. For example, by the SF receiving information related to service, QoS and QoE suitable for the service can be configured.

It is disclosed that an external apparatus may initiate the sensing processing. As another method, an application function (AF) may initiate sensing processing. The AF may transmit a sensing request to the SF. The sensing request may be transmitted via another NW function. For example, the AF transmits a sensing request to a network exposure function (NEF). The NEF transmits a sensing request to an AMF. The AMF transmits a sensing request to an SF. By receiving a sensing request, the SF can execute the sensing processing. The AF can initiate the sensing processing. For example, the AF can use a sensing result obtained by the sensing processing.

An NW function may initiate the sensing processing. The NW function may be a network data analytics function (NWDAF), for example. The NWDAF may transmit a sensing request to the SF. The sensing request may be transmitted via another NW function. For example, the NWDAF can use a sensing result obtained by the sensing processing, for NW data analysis.

The NW function may be a RAN node or a UE, for example. The RAN node or the UE may transmit a sensing request to the SF. The sensing request may be transmitted via another NW function. For example, the RAN node or the UE can use a sensing result obtained by the sensing processing, for optimization of radio communication processing.

A management node may initiate the sensing processing. The management node may be management service (MnS) or operations, administration and management (OAM), for example. The MnS or the OAM may transmit a sensing request to the SF. The MnS or the OAM may transmit a sensing request to the SF via another NW function. For example, the MnS or the OAM can use a sensing result obtained by the sensing processing, for NW management for optimization of communication processing.

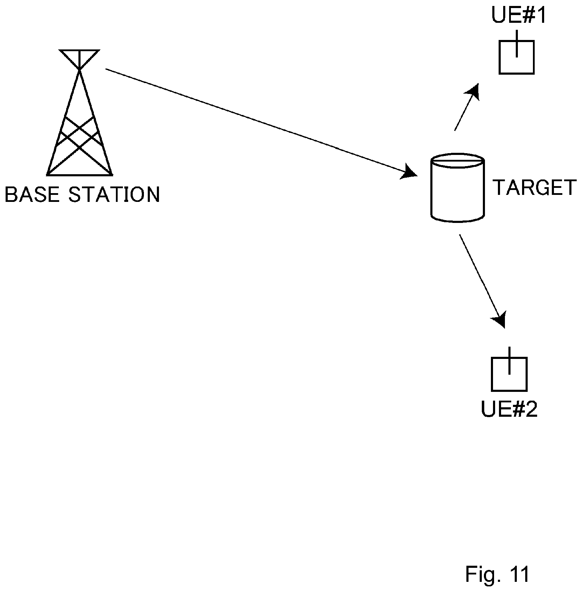

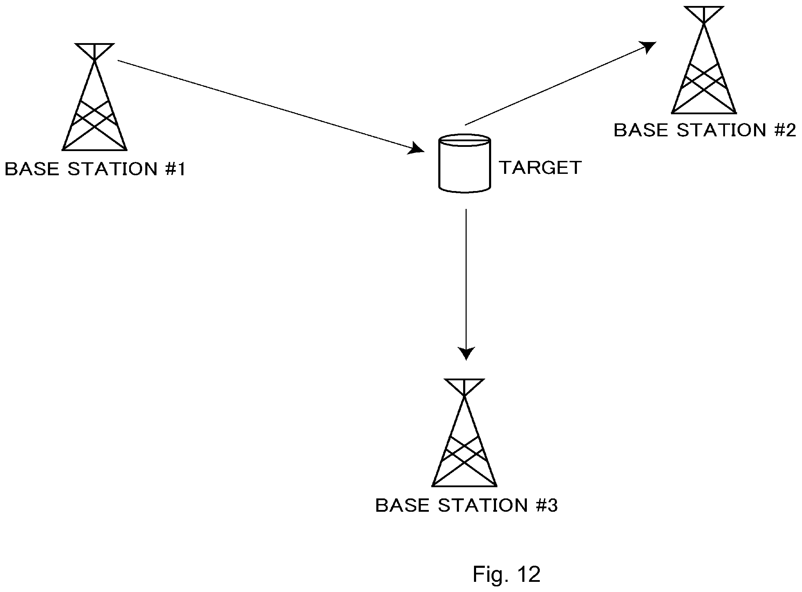

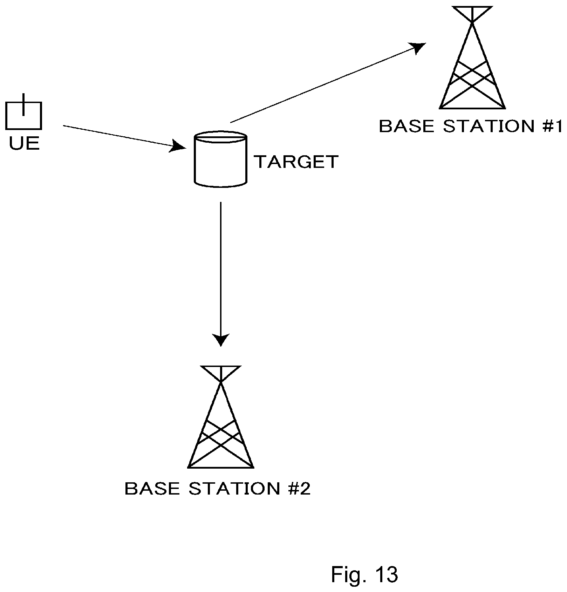

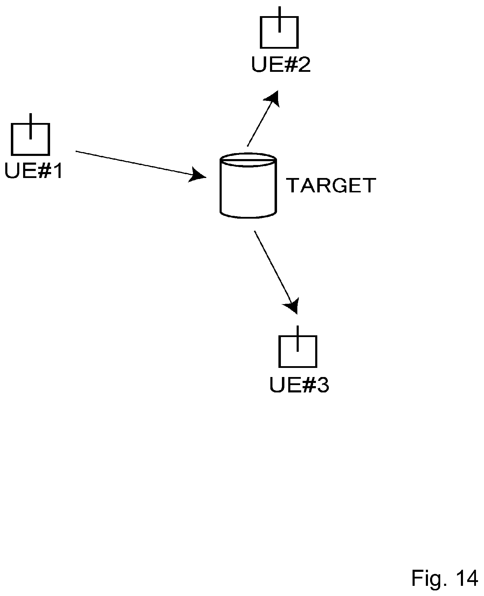

It is proposed to perform, in sensing using a mobile communication system, sensing of a target by using a UE(s) and a base station(s) (refer to NPL 31). Fig. 11 to Fig. 14 are conceptual diagrams of sensing using a UE(s) and a base station(s). Fig. 11 corresponds to a case where a base station is a transmission node of a resource to be used for sensing (sensing resource) and UEs are reception nodes of the sensing resource. Fig. 12 corresponds to a case where a base station is a transmission node of a sensing resource and base stations are reception nodes of the sensing resource. Fig. 13 corresponds to a case where a UE is a transmission node of a sensing resource and base stations are reception nodes of the sensing resource. Fig. 14 corresponds to a case where a UE is a transmission node of a sensing resource and UEs are reception nodes of the sensing resource.

However, NPL 31 discloses nothing about a method of determining a UE(s) and a base station(s) to be used for sensing. How to determine a UE(s) and a base station(s) to be used for sensing is a problem.

A method for solving such a problem will be disclosed.

A UE(s) present in a sensing area is derived based on information related to a sensing area. A UE present in a neighborhood of the sensing area, a UE capable of executing sensing processing, or a UE capable of receiving a sensing resource may be derived. These UEs are referred to as sensing-related UEs (sensing-related communication terminals). As the information related to a sensing area, information related to a certain area may be used. The number of UEs to be derived may be one or more than one. As a candidate for a UE to receive a sensing resource (referred to as a reception UE in some cases), a sensing-related UE may be derived.

An LMF may derive a sensing-related UE from the information related to a sensing area. The LMF has recognized location information of each UE. By using the LMF, a sensing-related UE can be identified. The sensing-related UE may be a UE having location information within a certain time. The sensing-related UE may be a UE having newest location information. The sensing-related UE may be a UE executing location management or executing location measurement. By using a UE having newer location information, more accurate sensing is possible.

A node to perform sensing request may transmit the information related to a sensing area to the LMF. The node to perform sensing request may request the LMF to provide sensing-related UE information. This request may include the information related to a sensing area. This information may include information related to a sensing area neighborhood. For example, the information related to a sensing area may be the distance from a certain area. By using these pieces of information, the LMF can derive a sensing-related UE. The request may include information related to a sensing target. By using the information, a sensing-related UE more suitable for the sensing request can be derived, for example.

The LMF transmits information related to the derived sensing-related UE, to the node that has requested provision of the sensing-related UE information. For example, when a gateway requests provision of sensing-related UE information, the LMF transmits information related to the derived sensing-related UE, to the gateway. Examples of the information related to a sensing-related UE include information for identifying a UE (for example, the identifier of the UE), location management information (such as location information or speed information) of the UE, information on whether or not the UE is within the sensing area, and the distance of the UE from the sensing area.

An interface is provided between a gateway for sensing and the LMF. The gateway may transmit a request for provision of sensing-related UE information to the LMF. The gateway that has received a sensing request from an external apparatus may transmit a request for provision of sensing-related UE information. The gateway has a routing function in sensing. The routing function may include the function of selecting a transmission destination of a request for provision of sensing-related UE information. The LMF that has received the request for provision of sensing-related UE information from the gateway derives a sensing-related UE. The LMF transmits information related to the derived sensing-related UE, to the gateway. In this way, the gateway can acquire information on the UE related to the sensing.

The LMF may transmit the information related to the derived sensing-related UE, to the SF. The information related to the sensing-related UE may be transmitted via the gateway. The gateway may have an SF selection function (which may be an SF routing function). The information related to the sensing-related UE may be transmitted via the AMF. The AMF may include the SF selection function. The LMF transmits information related to the UE, to the gateway. The gateway transmits information related to the UE, to the AMF. The gateway may include the information in a sensing request to be transmitted to the AMF. The AMF transmits the information related to the UE, to the SF. The AMF may include the information in a sensing request to be transmitted to the SF.

It has been disclosed that the LMF derives a sensing-related UE from the information related to a sensing area, to provide information on the sensing-related UE. However, this is not limited to the LMF, and may be any node having location information of a UE. For example, when a UDM, a GMLC, a location server, or the like has location information of a UE, the UDM, the GMLC, the location server or the like may derive a sensing-related UE from information related to sensing are, to provide information on the sensing-related UE. The above-described method may be applied as a provision method as appropriate.

It has been disclosed that the gateway may transmit a sensing request to the AMF (or to the SF via the AMF). However, different from an existing gateway for location management, a gateway cannot obtain UE information in sensing with a target other than a UE. The gateway cannot request the UDM to provide UE information and select an AMF to transmit a sensing request to.

A method for solving such a problem will be disclosed.

An interface is provided between a gateway for sensing and the UDM. The gateway that has received information related to a sensing-related UE from the LMF sends a request for information related to the UE to the UDM. The UDM that has received the request derives the information related to the UE. Examples of the information related to the UE include information on subscription of the UE and information of an AMF serving the UE. The UDM transmits information related to the UE, to the gateway. In this way, the gateway can acquire information related to an AMF serving a UE related to the sensing. The gateway can select an AMF to transmit a sensing request to. When the UDM has location information of the UE, request for provision of sensing-related UE information and request for information related to the UE may be performed together. These may be performed in one message. A signaling amount can be reduced.

A UE may transmit the information related to a sensing function held by the UE itself, to an NW node. The UE may include information related to the sensing function held by the UE itself, in capability information, for transmission to the NW node. The NW node may be an SF.

Six examples of the information related to a sensing function held by the UE itself will be disclosed below.
(1) Function of transmitting a sensing resource
(2) Function of receiving a sensing resource
(3) Function of measurement for sensing (sensing measurement function)
(4) Information on a supported sensing frequency
(5) Information on a window support for sensing
(6) Combination of (1) to (5)

(1) may be information on which sensing resource can or cannot be transmitted, without being limited to information on whether or not to have the function of transmitting a sensing resource, for example. For example, this may be an SRS, an RS provided for sensing, or the like.
(2) may be information on which sensing resource can or cannot be received, without being limited to information on whether or not to have the function of receiving a sensing resource, for example. For example, this may be a PRS, a CSI-RS, a synchronization signal block (SSB), an SRS, an RS provided for sensing, or the like.
(3) may be information on which sensing measurement index to support, without being limited to information on whether or not to have a sensing measurement function, for example. Examples of the sensing measurement index include an RSRP, an RSRQ, an SIR, a Doppler frequency, the angle of departure (AOD), the time difference of arrival (TDOA), the angle of arrival (AOA), a channel impulse response (CIR), and a power delay profile (PDP). (3) may be information on whether or not to have a function of measuring a change in time of such information. (3) may be information related to sensing measurement by line of sight (LOS) or non line of sight (NLOS). For example, (3) may be information on whether or not to support sensing measurement using LOS, information on whether or not to support sensing measurement using NLOS, information on whether or not to support a function of deriving that a path for sensing measurement is LOS or NLOS, or the like. (3) may be information on whether or not to have a function of deriving a location, a range, a speed, an acceleration, a moving direction, or the like.
(4) may be information such as a frequency band, a frequency layer, or a BWP, for example. (4) may be information on whether or not to have a full-duplex function or a subband full-duplex function, for example.

A window for sensing may be provided for sensing measurement. The UE performs sensing measurement in the window for sensing. No communication may be performed in the window for sensing. (5) is information on whether or not to have the function of performing sensing measurement in such a window for sensing, for example.

An NW node that has received such information related to the sensing function held by the UE itself can determine which UE can be used for sensing, which sensing can be performed, and the like, for example.

The NW node may request the UE to provide information related to a sensing function. The UE that has received the request transmits the information related to a sensing function to the NW node. For example, the SF may request the reception UE to provide the information. The reception UE transmits the information to the SF. The SF can perform sensing configuration for the reception UE in consideration of the information related to the sensing function of the reception UE. For example, the SF may request a sensing-related UE to provide the information. The sensing-related UE transmits the information to the SF. The SF can determine a reception UE in consideration of the information related to the sensing function of the sensing-related UE.

The NW node may be an AMF, for example. The AMF may transmit the information related to a sensing function received from the UE and held by the UE itself, to the SF. For example, the SF may transmit a sensing request to the AMF. This sensing request may include the information related to a sensing-related UE. The AMF may transmit the information related to a sensing function held by the sensing-related UE, to the SF in response to reception of the sensing request. The NW node may be a base station, for example. The base station may transmit the information related to the sensing function received from the UE and held by the UE, to the AMF.

The information related to the sensing function held by the UE may be transmitted to the NW node with information related to the location management function held by the UE. The sensing-related UE may have the location management function. The NW node can use the information related to the sensing function from the UE and the information related to the location management function, to determine which UE can be used for sensing, which sensing can be performed, and the like, for example.

A method of deriving a node related to sensing will be disclosed. A node related to sensing may be a node to be a candidate for transmitting a sensing resource to be used for sensing. The node may be a base station. When the node is a base station, the base station is referred to as a sensing-related base station. The AMF derives a base station serving the sensing-related UE. The derivation may be performed by using information related to the sensing-related UE. For example, the derivation may be performed by using information related to the sensing-related UE received from the gateway. The AMF may acquire the information related to the sensing-related UE from the UDM and use the information for derivation of the sensing-related base station. Acquisition of the information related to the sensing-related UE from the UDM by the AMF may be performed via the gateway.
Acquisition of the information related to the sensing-related UE from the UDM by the AMF may be performed after selection of the AMF by the gateway disclosed above. This can reduce complexity of processing.

The AMF may initiate service request for the sensing-related UE. The service request may include information indicating that this is for sensing. The sensing-related UE establishes a connection with the AMF. RRC connection with the base station may be maintained. This is effective when the sensing-related UE is not connected to the AMF or the base station, for example.

It has been disclosed that the AMF may transmit a sensing request to the SF. The sensing request may include the information related to the sensing-related base station. The SF can acquire the information related to the sensing-related base station.

One or more than one SFs may be present in an NW. For example, an SF may be provided for each certain sensing area. An interface may be provided between SFs. An SF may transmit a sensing request to another SF. The other SF may be an SF that manages a sensing area included in a sensing request. The SF may manage sensing in the sensing area.

A method of determining a node configured to transmit a sensing resource (referred to as a transmission node for sensing or simply as a transmission node in some cases) and a node configured to receive a sensing resource (referred to as a reception node for sensing or simply as a reception node in some cases) will be disclosed. The SF may determine a transmission node and a reception node. Each node may be a UE or a base station, for example. The number of reception nodes may be more than one without being limited to one.

The SF may use information related to a sensing-related UE and information related to a sensing-related base station that have received from the AMF, to determine a reception UE and a transmission base station, for example.

The SF may transmit information indicating a request for sensing configuration, to the transmission base station. This information may include information related to a reception UE, information related to a sensing measurement method, information related to a sensing frequency, and the like. This information may include the information included in a sensing request described above.

Another method will be disclosed. A base station may determine a reception UE. The base station may be a transmission base station. For example, the SF may determine a transmission base station, and the transmission base station determines a reception UE. This is effective when one or a plurality of reception UEs are under one base station, for example. The SF may transmit information for requesting determination of a reception UE, to the transmission base station. The information may be included in a sensing configuration request from the SF to the transmission base station. The base station may determine a reception UE in response to the request.

The transmission base station may transmit information related to the reception UE, to the SF. For example, the base station may transmit the information related to the reception UE to the SF together with the sensing configuration information. The SF can acquire the information related to the reception UE. The SF may transmit a sensing configuration to the reception UE. As another method, the transmission base station may directly notify the reception UE of the sensing configuration. A signaling amount can be reduced.

Another method will be disclosed. The AMF may determine a reception UE. For example, the SF may determine a transmission base station, and the AMF determines a reception UE. This is effective when one AMF serves one or a plurality of reception UEs, for example. The SF may transmit information for requesting determination of a reception UE, to the AMF. This request may include the information related to a transmission base station. The information may be included in a sensing request from the SF to the AMF. For example, the AMF may determine one or a plurality of UEs under the transmission base station or a base station nearby, as a reception UE(s). Not only a UE under the transmission base station but also a UE nearby can be determined as reception UEs.

The AMF may transmit information related to the reception UE, to the SF. The SF can acquire the information related to the reception UE. The SF may transmit a sensing configuration to the reception UE. As another method, the AMF may directly notify the reception UE of the sensing configuration. The AMF may notify the reception UE of a sensing configuration via the base station serving the reception UE. A signaling amount can be reduced.

The AMF may initiate a service request for the reception UE. For example, upon reception of a sensing request from the SF to the reception UE, the AMF may initiate a service request for the reception UE. For example, when the AMF determines a reception UE, the AMF may initiate a service request for the reception UE. The service request may include information indicating that this is for sensing. The reception UE establishes a connection with the AMF. RRC connection with the base station may be maintained. This is effective when the reception UE is not connected to the AMF or the base station, for example.

An example of a method of determining a transmission base station and a reception UE will be disclosed. A transmission base station and a reception UE are determined separately. The SF determines a transmission base station. The SF transmits a sensing configuration request to the transmission base station. The transmission base station determines a sensing configuration. The transmission base station transmits the sensing configuration to the SF. The SF determines a reception UE. The SF performs NW-initiated service request processing for the reception UE. Each reception UE may be connected to a different base station. The SF establishes a connection with each reception UE and transmits a sensing configuration to the reception UE via a base station. In this way, a sensing configuration can be shared by the transmission base station and the reception UE. By using the sensing configuration, sensing processing can be executed.

The transmission base station may transmit a sensing configuration to the base station to which the reception UE is connected. An interface between base stations may be used for the transmission. For example, the transmission base station may transmit a sensing configuration by using Xn interface. The transmission base station may transmit information related to the reception UE together with the sensing configuration. The base station that has received the information may transmit the sensing configuration to the reception UE under the base station itself. As described above, since the sensing configuration to the reception UE can be transmitted without involving the SF, a signaling amount can be reduced.

Another example of the method will be disclosed. After determination of a reception UE, a transmission base station is determined based on information related to the determined reception UE. The SF determines one or a plurality of reception UEs. The SF performs NW-initiated service request processing for the reception UE. The AMF transmits information related to a base station to which the reception UE is connected, to the SF. The SF determines a transmission base station, based on the base station to which the reception UE is connected. The SF transmits a sensing configuration request to the transmission base station. The transmission base station determines a sensing configuration. The transmission base station transmits the sensing configuration to the SF. The SF transmits a sensing configuration to the reception UE. In this way, a sensing configuration can be shared by the transmission base station and the reception UE. By using the sensing configuration, sensing processing can be executed.

The transmission base station may transmit a sensing configuration to the base station to which the reception UE is connected. The method disclosed above may be applied as appropriate.

The reception UE may be limited to one or a plurality of UEs connected to one base station. The one base station may be a transmission base station. The base station to which a certain number of reception UEs or more are connected may be determined as a transmission base station. By using one base station and UEs connected to the base station, complexity of sensing processing can be reduced.

The reception UE may be limited to an RRC_Connected UE. The reception UE need not be limited to an RRC_Connected UE. The reception UE may be an RRC_Idle or RRC_Inactive UE. The reception UE may receive a sensing configuration at the time of RRC_Connected. For example, the reception UE may receive the sensing configuration from the SF or the base station. The reception UE may use a sensing configuration received last also after being shifted to RRC_Idle or RRC_Inactive. The reception UE can perform sensing measurement even in RRC_Idle or RRC_Inactive.

The transmission base station transmits radio waves for sensing toward a target. The transmission base station transmits a resource (sensing resource) to be used for sensing on the radio waves for sensing. The transmission base station may transmit the sensing resource by using a beam. The sensing resource may be a resource on a frequency-time axis. For example, the sensing resource may be a signal provided for sensing. For example, the sensing resource may be an RS transmitted on a frequency-time axis. For example, the sensing resource may be an RS, a PRS, a CSI-RS, an SSB, an SS, an MIB, a DM-RS of an MIB, or the like provided for sensing.

The transmission base station determines a beam to be used for sensing. The transmission base station may use a beam for communication, for a beam for sensing. The beam for communication may be a beam configured for a UE by the transmission base station without being limited to a beam actually transmitting data. For example, the base station may use a measurement result report for an RS corresponding to the beam for communication in the UE, to determine a beam for sensing. For example, the transmission base station may use a measurement result report for an SSB, a CSI-RS, or a PRS to determine a beam for sensing. For example, the transmission base station may use information related to the reception UE received from the SF, to determine a beam to be used for sensing by using a beam for communication with the reception UE. For example, the transmission base station may use the information related to the reception UE received from the SF, to determine a beam to be used for sensing by using a beam to be transmitted near a beam for communication with the reception UE.

The transmission base station may select one of a plurality of beams for communication, as a beam for sensing. This is effective when a plurality of reception UEs are involved and a plurality of beams to be used for communication with the UEs are present, for example. By using one beam for sensing, the sensing processing can be facilitated.

The transmission base station transmits a sensing resource by using the determined beam for sensing. For example, the sensing resource may be an RS provided for sensing configured for sensing. Alternatively, the sensing resource may be a PRS, a CSI-RS, an SSB, or the like. The transmission base station determines a sensing resource to be used for sensing.

The transmission base station may transmit QCL information of the sensing resource to the UE, to identify the beam. The QCL information can indicate which RS is quasi-colocated with the sensing resource.

The transmission base station performs sensing configuration including resource information for sensing, QCL information, and the like. In this way, a sensing configuration to be used for detection of a sensing target can be derived. The transmission base station may transmit the sensing configuration to the SF.

The transmission base station may perform beam sweeping. The transmission base station may transmit a plurality of beams in different directions. The transmission base station may perform beam sweeping by using a plurality of beams. The transmission base station may select a plurality of beams from a plurality of beams for communication, as a beam for sensing. For example, the transmission base station may use information related to the reception UE received from the SF, to determine a beam to be used for sensing by using a plurality of beams for communication with the reception UE. For example, a beam for communication in which one reception UE performs data communication and a beam in a nearby direction may be determined as beams for sensing. For example, the transmission base station may determine beams for communication in which a plurality of reception UEs perform data communication, as beams for sensing. The transmission base station may sweep the plurality of sensing beams. The transmission base station may transmit, in each of the plurality of determined beams for sensing, a sensing resource configured for the beam. The transmission base station performs sensing configuration including pieces of resource information for sensing, pieces of QCL information, and the like on the plurality of beams. In this way, a sensing configuration to be used for detection of a sensing target can be derived. The transmission base station may transmit the sensing configuration to the SF.

It has been disclosed that a UE reports a measurement result of a beam for communication, to a transmission base station and the transmission base station determines a beam for sensing by using the measurement result. The UE may transmit measurement results of a plurality of paths for the same beam, to the base station. The UE may transmit a measurement result for each path, to the base station. The UE may transmit a measurement result of LOS and/or NLOS, to the base station. The UE may transmit measurement results of LOS and NLOS for each path, to the base station. The UE may transmit information indicating LOS or NLOS for the measurement result of each path. As another method, information indicating whether or not a measurement result transmitted from the UE to the base station is NLOS may be included in the measurement result, for transmission. The UE may include information indicating the probability or likelihood that the measurement result is NLOS, in the measurement result, for transmission. The UE may include information indicating whether or not the measurement result is LOS, in the measurement result, for transmission. The UE may include information indicating the probability or likelihood that the measurement result is LOS, in the measurement result, for transmission. The LOS may be determined as a first arriving path (FAP). The UE may estimate that the FAP corresponds to LOS.

The transmission base station may select a beam having a path corresponding to NLOS, as a beam for sensing. In sensing, a reception UE may measure an NLOS path from the transmission base station. The reception UE can receive reflected waves from a target, for measurement.

A sensing configuration method will be disclosed. A sensing configuration is shared between a transmission node and a reception node. For example, the sensing configuration is shared between a transmission base station and one or a plurality of reception UEs.

The SF transmits a request for a sensing configuration, to a base station. The base station that has received the request performs sensing configuration. The base station transmits sensing configuration information to the SF. The SF transmits sensing configuration information to one or a plurality of reception UEs. The SF may transmit the sensing configuration information to one or a plurality of reception UEs via the base station serving the reception UEs. In this way, the reception UE(s) can acquire the sensing configuration. The transmission base station and the reception UE(s) can share the sensing configuration.

As a method of transmitting sensing configuration information from the base station to a plurality of reception UEs, the plurality of reception UEs may be grouped, for example. For example, a common RNTI may be provided. By detecting a PDCCH using the common RNTI, the plurality of reception UEs can each recognize that sensing configuration information destined to the reception UE itself is included. As another method, for example, a group ID may be provided. For example, the group ID is transmitted together with the sensing configuration information or included in the information, for transmission to the reception UEs. By detecting the group ID, the plurality of reception UEs can each recognize that sensing configuration information destined to the reception UE itself is included. The common RNTI and the group ID may be configured in advance. For example, these may be configured for a UE by the base station in service request processing of the UE. For example, the base station may notify the UE of these in the first sensing configuration. The common RNTI and the group ID can be used in subsequent sensing configuration. Transmission of sensing configuration information has been disclosed. However, this is not restrictive and may be applied to notification of information related to sensing between a base station and a plurality of reception UEs. In this way, a signaling amount between the transmission base station and the plurality of reception UEs can be reduced.

The SF may transmit a request for sensing configuration to a plurality of base stations. The base station that has received the request performs sensing configuration. For example, the plurality of base stations may be sensing-related base stations. The SF may use the sensing configuration of each of the plurality of base stations, to select a transmission base station. By performing the above-described processing before determination of a transmission base station, a base station more suitable for QoS and QoE required for sensing can be selected as a transmission base station, for example.

The SF may notify the selected transmission base station that the base station is selected as a transmission base station. A sensing request may be transmitted. The selected base station can recognize that the base station itself is a transmission base station. The SF transmits sensing configuration information to one or a plurality of reception UEs. In this way, the reception UE(s) can acquire the sensing configuration. The transmission base station and the reception UE(s) can share the sensing configuration.

The sensing configuration request may include information related to a sensing target. The sensing configuration request may include information related to a reception UE. The transmission base station determines a beam to be used for sensing, to derive a sensing configuration.

Four examples of information included in the sensing configuration will be disclosed below.
(1) Information related to configuration of a sensing resource
(2) Information related to configuration of sensing measurement
(3) Information related to reporting of a sensing measurement result
(4) Combination of (1) to (3)

Eight examples of information (1) related to configuration of a sensing resource will be disclosed below.
(1-1) Information related to a resource to be used for sensing
(1-2) Allocation information of a sensing resource
(1-3) Periodicity of a sensing resource and offset information
(1-4) Start time and end time of a sensing resource and sensing resource transmission period information
(1-5) Information related to a beam to be used for sensing
(1-6) QCL information of a sensing resource
(1-7) Information related to power of a sensing resource
(1-8) Combination of (1-1) to (1-7)

(1-1) may be information on a frequency to be used for sensing, for example. For example, (1-1) may be information on an RS to be used for sensing. The information to be used for sensing may be information such as a frequency band, a frequency layer, or a BWP, for example. A frequency band, a frequency layer, a BWP, or the like for sensing may be provided. These may be sensing-dedicated. By specifying a frequency to be used for sensing, complexity of processing of nodes to perform sensing processing such as a UE and a base station can be reduced. For example, information on an RS to be used for sensing may be an RS, a PRS, an SSB, a CSI-RS, or the like provided for sensing. A reception UE can recognize which sensing resource to receive.
(1-2) may be time-frequency information for mapping a sensing resource, for example. Examples of time information include symbol, slot, radio frame, and the like for mapping a sensing resource. Alternatively, this may be a time unit such as second, hour, day, or year. Examples of frequency information include a subcarrier, a resource block, a subband, a BWP, and a carrier frequency for mapping a sensing resource, and a frequency layer for sensing.

Sensing may be supported in an SCell (which may be a CC). Sensing may be supported in an SCG. Sensing may be supported in a PSCell. An SCell, an SCG, a PSCell dedicated to sensing may be provided. For example, communication is performed in a PCell while sensing is performed in an SCell, which can reduce complexity of sensing processing during communication.

Allocation information (1-2) of a sensing resource may be information for identifying an SCell, an SCG, and a PSCell. A reception UE can receive configuration information of a sensing resource in each of the SCell, the SCG, and the PSCell.

The sensing resource may be transmitted periodically. (1-3) may be periodicity of a sensing resource and offset information transmitted periodically.

(1-4) may be information on a start time and an end time of transmission of a sensing resource and a transmission period. For example, a sensing resource is transmitted periodically in the transmission period. The time unit may be symbol, slot, or radio frame, or second, hour, day, or year.

(1-5) is information related to a beam for sensing for transmitting a sensing resource. An identifier may be provided for a beam for sensing. A reception UE can identify the beam for sensing. For example, an identifier used for a beam for communication may be used as an identifier to be used for a sensing beam. This can indicate an association with the beam for communication and can utilize configuration of the beam for communication.

(1-6) is information on a resource having a QCL relationship with a sensing resource. For example, (1-6) may be information on an RS for communication with which an RS for sensing has a QCL relationship. In this way, for example, a measurement result related to a resource for communication having a QCL relationship with a sensing resource is used as a substitute for a measurement result of the sensing resource, which can facilitate processing.

(1-7) is information related to transmission power of a sensing resource. For example, the transmission power information may be an absolute value of transmission power. For example, the transmission information may be a difference between the sensing resource and another channel or another RS. A reception UE can recognize transmission power of the resource for sensing. For example, the reception UE may use the transmission power information to derive a pathloss. The pathloss may be used as a sensing measurement index.

Four examples of information (2) related to configuration of sensing measurement will be disclosed below.
(2-1) Information related to a measurement gap for sensing
(2-2) Information related to a window for sensing measurement
(2-3) Information related to a sensing measurement index
(2-4) Combination of (2-1) to (2-3)

A measurement gap may be provided for sensing. Examples of (2-1) include a period, a start time, and an end time of the measurement gap for sensing. The time unit may be symbol, slot, or radio frame, or second, hour, day, or year. The number of measurement gaps for sensing to be configured may be more than one without being limited to one. The measurement gap for sensing is effective when sensing is performed at a frequency different from the frequency for communication, for example. A reception UE can be switched from the frequency for communication to a sensing frequency in the gap, which enables sensing measurement to be performed.

A window may be provided for sensing measurement. Examples of (2-2) include a period, a start time, and an end time of the window for sensing. The time unit may be symbol, slot, or radio frame, or second, hour, day, or year. The number of windows for sensing may be more than one without being limited to one. The window for sensing is effective when sensing is performed at the frequency for communication, for example. For example, it may be configured that a reception UE need not receive a channel or a signal for communication in the window for sensing. The reception UE can perform sensing measurement in the sensing window.

10 examples of information (2-3) related to a sensing measurement index will be disclosed below.
(2-3-1) RSRP
(2-3-2) RSRQ
(2-3-3) Doppler frequency
(2-3-4) AOA
(2-3-5) AOD
(2-3-6) TDOA
(2-3-7) CIR
(2-3-8) PDP
(2-3-9) Sensing measurement time
(2-3-10) Combination of (2-3-1) to (2-3-9)

Which index to measure as sensing measurement can be configured for a reception UE. By receiving the information, the reception UE can recognize which index to measure as sensing measurement.

Information related to sensing resource may be included in information related to a sensing measurement configuration. Information related to a sensing resource for performing sensing measurement may be included. For example, when a plurality of sensing resources are configured, which sensing resource to measure can be recognized.

By receiving the configuration of sensing measurement, the reception UE can perform sensing measurement.

Three examples of information (3) related to reporting of a sensing measurement result will be disclosed below.
(3-1) Reporting trigger
(3-2) Information related to a measurement result
(3-3) Combination of (3-1) and (3-2)

(3-1) may be information indicating whether timing for performing reporting of a sensing measurement result is periodic or event-triggered, for example. When the timing for performing reporting of a sensing measurement result is periodic, this may be information such as periodicity, a start time, an end time, and the like of reporting of a measurement result. When the timing for performing reporting of a sensing measurement result is event-triggered, this may be information related to a condition for reporting a sensing measurement result. The condition may be a certain threshold of a sensing measurement index, for example. For example, a threshold of an RSRP may be provided. It may be configured that, when an RSRP is equal to or larger than or is larger than the threshold, the reception UE reports a measurement result. The condition may be a case where a radio-wave propagation state or a channel state has changed, for example. For example, it may be configured to report a measurement result when the path of LOS or NLOS has changed. For example, it may be configured to report a measurement result when a FAP has changed.

As another method, when the timing is event-triggered, the reception UE may report that a corresponding event has occurred. A node that has received the report can recognize that the event has occurred. For example, a sensing configuration can be changed by using the report. More appropriate sensing processing can be executed.

Examples of (3-2) may include information related to a transmission base station, information related to a measured sensing resource, information related to a measured beam for sensing, and a sensing measurement index. (3-2) may be the identifier of a transmission base station, the identifier of a sensing resource, or the identifier of a beam for sensing. A node that has received a measurement result can identify which sensing resource of which sensing beam of which transmission base station.

For a sensing configuration, a configuration of a sensing resource, information related to a configuration of a sensing resource, a configuration of sensing measurement, information related to a configuration of sensing measurement, a configuration of reporting of a sensing measurement result, or information related to reporting of a sensing measurement report, the number of pieces of information to be configured may be more than one without being limited to one. Each configuration or piece of information may be provided with information for identifying the configuration or the piece of information. For example, the information for identification may be an identifier. For example, the SF may determine one sensing configuration or piece of information from among a plurality of sensing configurations or pieces of information, and which configuration or which piece of information can be identified. In this way, for example, a sensing configuration may be changed according to measurement environment, which enables flexible sensing configuration.

A sensing execution method will be disclosed. The SF transmits a sensing start request to a base station. The sensing start request may be a sensing request. The sensing start request may be a request for sensing resource transmission start. The base station that has received the sensing start request performs transmission of a sensing resource. The sensing resource conforms to a sensing configuration.

The SF transmits a sensing request to a UE. The sensing start request may be a sensing request. The sensing start request may be a request for sensing resource reception start. The UE that has received the sensing start request performs reception of a sensing resource. The sensing resource conforms to a sensing configuration. The reception UE that has received the sensing start request performs sensing measurement. The sensing measurement is performed by using the sensing configuration. The reception UE transmits a sensing measurement result to the SF. Reporting of the sensing measurement result is performed by using the sensing configuration. In this way, the reception UE can execute sensing measurement, and the SF can receive the result of the sensing measurement performed by the reception UE.

The sensing measurement result may include measurement results of a plurality of paths for the same beam. The sensing measurement result may include a measurement result for each path. The sensing measurement result may include a measurement result of LOS and/or NLOS. A measurement result of LOS and NLOS for each path may be included. Information indicating LOS or NLOS for the measurement result of each path may be included. Information indicating whether or not the measurement result is NLOS may be included. Information indicating the probability or likelihood of being NLOS may be included. Information indicating whether or not the measurement result is LOS may be included. This may be information indicating the probability or likelihood of being LOS. The LOS may be an FAP. The SF can determine whether the sensing measurement result acquired from the reception UE is a measurement result of a path of LOS or a measurement result of a path of NLOS.

For example, when the measurement result corresponds to LOS, the reception UE may determine that direct radio waves from the transmission base station are received, which are not those reflected from a target. Reflection from a target desirably corresponds to NLOS. A measurement result of a path of NLOS may be used for sensing of the target. A measurement result of a path of LOS may be excluded for sensing of the target. In this way, a more accurate sensing result can be derived from sensing measurement results.

The transmission base station may change a sensing configuration. The changed sensing configuration may be transmitted to the SF. The SF transmits changed sensing configuration information, to one or a plurality of reception UEs. In this way, the reception UE(s) can acquire the changed sensing configuration. The transmission base station and the reception UE(s) can share the sensing configuration.

The SF may change a sensing configuration. For example, the SF may select another sensing configuration or information from a plurality of sensing configurations or pieces of information received from the transmission base station. The SF transmits the selected sensing configuration or information sensing configuration the changed information, to the transmission base station and one or a plurality of reception UEs. In this way, the transmission base station and the reception UE(s) can acquire the changed sensing configuration. The transmission base station and the reception UE(s) can share the sensing configuration.

A reception UE may request change of the sensing configuration. For example, the UE may make the request to a node configured to perform the sensing configuration or a node configured to perform change of the sensing configuration, such as the SF, the AMF, or the base station. The node that has received the request may change the sensing configuration. The sensing configuration request may include information for identifying the sensing configuration and information related to sensing measurement quality. As another example, the sensing configuration change request may include desired sensing configuration information. The reception UE can make notification of which sensing configuration is preferable. The node configured to perform sensing configuration or the node configured to perform change of sensing configuration can perform the sensing configuration by using the desired sensing configuration information from the UE. Sensing configuration more suitable for the state of the reception UE is enabled.

By enabling a sensing configuration change request from the reception UE, the sensing configuration change request can be executed when reception quality decreases in the reception UE or overlapping with a resource for communication has occurred, for example. Such a problem can be prevented or reduced.

For example, the SF that has received a sensing configuration change request from the UE may transmit a sensing configuration request to the base station. The request may include information indicating that this is a sensing configuration change request. As another method, the sensing configuration change request may be provided separately from the sensing configuration request. The SF that has received a sensing configuration change request from the UE may transmit the sensing configuration change request to the base station. The base station that has received the sensing configuration change request performs change of the sensing configuration. The base station transmits the changed sensing configuration to the SF. The SF transmits the changed sensing configuration to the reception UE. In this way, the reception UE can acquire the sensing configuration after the change and execute sensing measurement by using the configuration.

The transmission base station may request change of a sensing configuration. The transmission base station may make the request to a node configured to perform the sensing configuration or a node configured to perform change of the sensing configuration. The method of performing sensing configuration change request by a UE described above may be applied as appropriate. Sensing configuration more suitable for the state of the transmission base station is enabled.

The AMF may request change of a sensing configuration. The AMF may make the request to a node configured to perform the sensing configuration or a node configured to perform change of the sensing configuration. The method of performing sensing configuration change request by a UE described above may be applied as appropriate. Sensing configuration more suitable for the state of the AMF is enabled.

Sensing execution start/execution stop (activation/deactivation) may be provided. Sensing execution start may be provided separately from sensing start request. Sensing execution start/execution stop may include information for identifying the sensing configuration for which execution is started/execution is stopped. For example, the identifier of the sensing configuration disclosed above may be included. Execution start/execution stop of one or a plurality of sensing configurations among one or a plurality of sensing configurations configured in advance may be performed. The SF transmits execution start/execution stop of a sensing configuration to the reception UE. The reception UE performs sensing measurement by using the sensing configuration for which execution is started. The reception UE stops sensing measurement using the sensing configuration for which execution is stopped.

Sensing execution start/execution stop may be used to change a sensing configuration. Execution stop is performed on a sensing configuration before change, and execution start is performed on a sensing configuration after the change. In this way, when change of a sensing configuration is needed according to the state, transmission time of the sensing configuration after the change and processing in the reception UE according to this as well as retransmission of a sensing request in the sensing configuration after the change and processing in the reception UE according to this are not needed, which enables processing of changing a sensing configuration with low delay.

It has been disclosed that the SF performs execution start/execution stop of sensing. However, the AMF may perform these. The AMF transmits execution start/execution stop of a sensing configuration to the reception UE. Execution start/execution stop can be performed by AMF-UE signaling, and hence SF-UE signaling is not needed. Processing of change of a sensing configuration can be performed at an earlier stage.

The base station may perform execution start/execution stop of sensing. The base station transmits execution start/execution stop of a sensing configuration to the reception UE. Base station-UE signaling may be used. For example, RRC signaling may be used. A number of pieces of information can be transmitted. For example, MAC signaling may be used. Early transmission is possible. For example, L1/L2 signaling may be used. This may be included in DCI. Earlier transmission is possible. Execution start/execution stop can be performed by base station-UE signaling, and hence SF-UE signaling is not needed. Processing of change of a sensing configuration can be performed at an earlier stage.

The SF uses a sensing measurement result to derive a sensing result. Examples of information included in the sensing result include a three-dimensional object detection result and a six-dimensional (three-dimensional coordinates + three-axis directions) object detection result of a target, and the shape, size, position, speed, moving direction, water level, humidity, air pressure, heartbeat, and the like of an object, The information included in the sensing result may be time information, for example. The time information may be a time at which a target is detected, a detection period, a time at which a target is no longer detected, or the like, for example. Information related to a sensing result may be used to derive a sensing result. Information indicating what kind of object a target is, for example, an invader, an obstacle, a river, the atmosphere, or the like may be included in the sensing result. Information related to a target may be used to derive a sensing result. Information included in a sensing result may be information related to area for sensing, information related to a sensing time, information related to accuracy, a QoS measurement result, information related to a QoE measurement result, or the like. The information included in the sensing result may be information on whether or not a target is present or is detected, for example. Information included in a sensing request may be used to derive the sensing result.

The SF transmits a sensing result to an external apparatus, an AF, an NW node, or a management node that has initiated sensing request. For example, to transmit a sensing result to an external apparatus, the SF may transmit the sensing result via a gateway. When the SF has received a sensing request from the AMF, the SF may transmit a sensing result to the AMF, and the AMF may transmit the sensing result to the external apparatus via the gateway.

The SF may transmit a part of or all the sensing measurement results to the external apparatus, the AF, the NW node, or the management node that has initiated sensing request. This may be transmitted separately from the sensing result. It is possible for the external apparatus, a node, and the like other than the SF to deal with the sensing measurement result. This may be transmitted together with the sensing result. A signaling amount can be reduced. It is effective when a sensing result is processed in the external apparatus, for example.

A method of ending sensing will be disclosed. The SF transmits sensing end to the transmission base station. A sensing end message may be provided. The transmission base station that has received the sensing end performs transmission of a sensing resource. Transmission of a sensing resource in each of all the sensing configurations for which execution of sensing has been started may be ended. The transmission base station may release a sensing configuration. The transmission base station may release all the sensing configurations. The transmission base station transmits sensing end completion to the SF. A sensing end completion message may be provided.

The SF transmits sensing end to a part of or all the reception UEs. A sensing end message may be provided. The reception UE(s) that has received the sensing end ends reception of a sensing resource. Reception of a sensing resource in each of all the sensing configuration for which execution of sensing has been started may be ended. The reception UE(s) may release a sensing configuration. The reception UE(s) may release all the sensing configurations. The reception UE(s) transmits sensing end completion to the SF. A sensing end completion message may be provided.

The external apparatus may initiate sensing end. The external apparatus transmits sensing end to the SF. The external apparatus may transmit sensing end to the SF via the gateway. The method of transmitting a sensing request disclosed above may be applied as appropriate. The SF that has received the sensing end performs sensing end processing disclosed above, on the transmission base station and the reception UE. The SF that has completed the sensing end processing may transmit sensing end completion to the external apparatus. The SF may transmit sensing end completion to the external apparatus via the gateway. The external apparatus that has initiated sensing can initiate sensing end. The external apparatus can determine whether or not sensing has been completed.

Initiation of sensing processing for the same target may be restricted. It may be configured not to be able to initiate a plurality of events of sensing processing for the same target. It may be configured that, when the external apparatus, an NW node, or a management node that initiates sensing processing has not received sensing end for a given target, a sensing request for the same target cannot be made. In this way, complexity of the sensing processing can be prevented.

As another method, a plurality of events of sensing processing for the same target may be initiated. For example, a plurality of events of sensing processing that require different sensing times for the same target may be initiated. For example, a plurality of events of sensing processing that require different sensing results for the same target may be initiated. For example, an external apparatus, an NW node, or a management node that initiates each event of the sensing processing may be different. In this way, for example, a plurality of sensing results can be obtained for the same target. More flexible sensing processing is enabled.

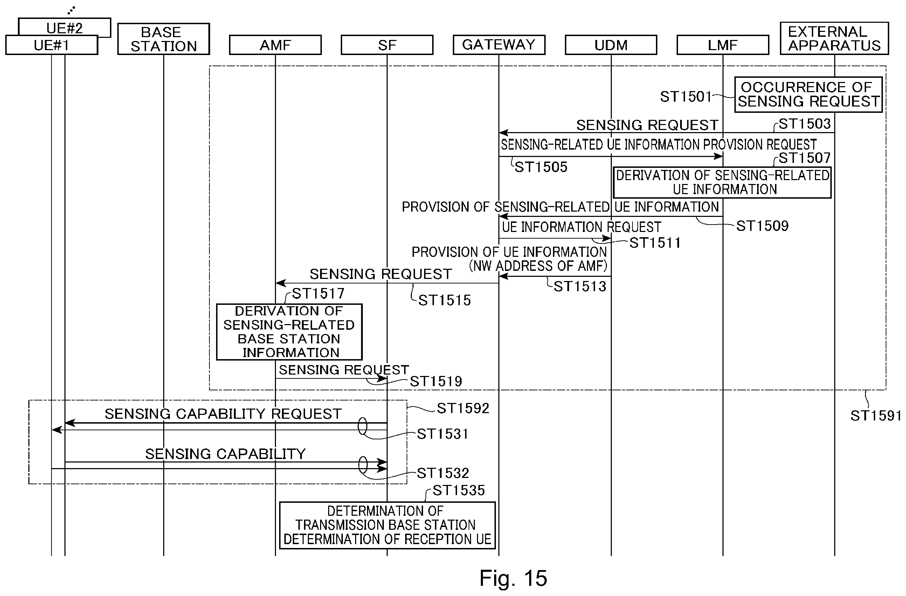

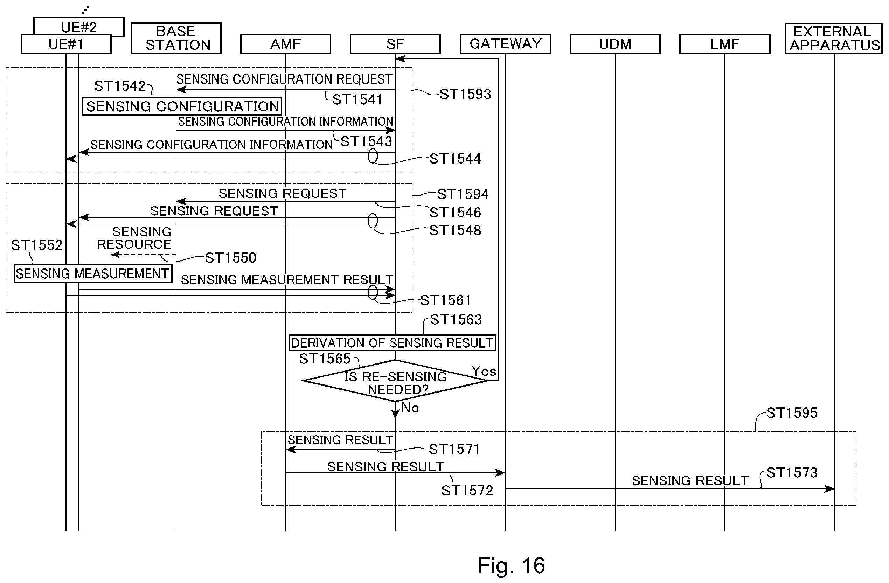

Fig. 15 and Fig. 16 are diagrams illustrating a sequence example of sensing processing. Disclosed is an example where sensing is initiated by an external apparatus. Also disclosed is an example where an LMF derives sensing-related UE information. In step ST1501, a request for sensing occurs in the external apparatus, and sensing is initiated. In step ST1503, to transmit the sensing request to an NW, the external apparatus transmits the sensing request to a gateway for sensing. The sensing request may include information as those disclosed above. For example, information related to a sensing area may be information indicating a certain area. A sensing target need not be a UE. For example, an example where the sensing target is not a UE will be disclosed.

In step ST1505, the gateway transmits a sensing-related UE information provision request to the LMF. This request may include the information related to the sensing area. This request may include another piece of information included in the sensing request. In step ST1507, the LMF derives sensing-related UE information. For the derivation of the sensing-related UE information, the information related to the sensing area may be used. The number of sensing-related UEs may be more than one without being limited to one. For example, a maximum value of the number of sensing-related UEs may be provided. For example, the maximum value may be provided for a mobile communication system. The LMF derives a sensing-related UE within the maximum value. By providing the maximum value, complexity of sensing processing can be reduced.

The LMF may transmit the information related to the sensing area, to another LMF. The other LMF may be an LMF configured to manage the sensing area. The other LMF may derive sensing-related UE information by using the information related to the sensing area. The other LMF may transmit the sensing-related UE information to the LMF. For transmission and reception of the information between the LMFs, an interface between the LMFs may be used. For example, when the LMF that has received the sensing-related UE information provision request from the gateway does not manage the sensing area, the LMF can request another LMF managing the sensing area to provide the sensing-related UE information.

In step ST1509, the LMF transmits a response to the sensing-related UE information provision request, to the gateway. This response may include the sensing-related UE information. Even if the sensing target is not a UE, the gateway can acquire information related to a UE possible to be used for sensing.

In step ST1511, the gateway transmits a UE information request for the sensing-related UE, to the UDM. This request may include the sensing-related UE information. The request may include information indicating that this is for sensing. This request may include the information on what to request as UE information. The UDM that has received the request derives UE information of the sensing-related UE. For example, this may be registration information of the UE, NW address information of the AMF serving the UE, or the like. In step ST1513, the UDM transmits UE information of the sensing-related UE, to the gateway. The gateway can acquire the UE information on the sensing-related UE.

In step ST1515, the gateway transmits a sensing request to the AMF serving the sensing-related UE. The number of AMFs may be more than one without being limited to one. The request may include information indicating that this is a sensing request and information on the sensing-related UE served by the AMF. In step ST1517, the AMF derives information related to a base station serving the sensing-related UE. The base station may be a sensing-related base station. In step ST1519, the AMF transmits a sensing request to the SF. The AMF may have the function of selecting an SF. The request may include information indicating that this is a sensing request, information included in the sensing request, sensing-related UE information, and sensing-related base station information. The whole processing from step ST1501 to step ST1519 is referred to as sensing request processing in step ST1591.

In step ST1531, the SF transmits, to each sensing-related UE, a request to provide information related to a sensing function held by the UE. The SF may transmit a request for capability information to the sensing-related UE. The SF may transmit the request to the sensing-related UE via the AMF and the base station. In step ST1532, the sensing-related UE transmits, to the SF, information related to the sensing function held by the UE itself. The sensing-related UE may transmit the information related to the sensing function to the SF via the base station and the AMF. The SF can acquire the information related to the sensing function held by the sensing-related UE. The whole processing from step S1531 and step S1532 is referred to as sensing capability request processing in step ST1592.

The SF determines a transmission base station and a reception UE in step ST1535. The number of reception UEs may be more than one without being limited to one. The SF may use information included in the sensing request to derive the reception UE. When deriving the reception UE, the SF may use the information related to the sensing function held by the sensing-related UE.

In step ST1541, the SF transmits a sensing configuration request to the transmission base station. The request may include information indicating that this is a request for a sensing configuration. This request may include information related to the reception UE. This request may include the information related to the sensing function held by the reception UE. The transmission base station that has received the sensing configuration request performs sensing configuration in step ST1542. For example, configuration of a sensing resource, configuration of sensing measurement, or configuration of information related to reporting of a sensing measurement result is performed. In step ST1543, the transmission base station transmits sensing configuration information to the SF. The SF can acquire the sensing configuration information. In step ST1544, the SF transmits sensing configuration information to the reception UE. The reception UE can acquire the sensing configuration information. The whole processing from step ST1541 to step ST1544 is referred to as sensing configuration processing in step ST1593.

The transmission base station may perform a part of sensing configuration, and the SF may perform the remaining part of the sensing configuration. For example, the transmission base station may perform configuration of a sensing resource, the SF may perform configuration of sensing measurement and configuration of reporting of a sensing measurement result. The SF can perform configuration of sensing measurement and configuration of reporting of a sensing measurement result suitable for all the reception UEs.

The SF may perform sensing configuration. In this case, sensing configuration request and transmission of the configuration between the SF and the transmission base station need not be performed. The transmission base station need not perform the sensing configuration. Processing in the transmission base station can be reduced. The SF may transmit a sensing configuration to the transmission base station and all the reception UEs. By the SF performing the sensing configuration, the sensing configuration suitable for the transmission base station and all the reception UEs can be performed.

The SF determines to execute sensing measurement. In step ST1546, the SF transmits a sensing request to the transmission base station. In step ST1548, the SF transmits a sensing request to each reception UE. In step ST1550, the transmission base station transmits a sensing resource according to the sensing configuration. In step ST1552, the reception UE executes sensing measurement according to the sensing configuration. In step ST1561, each reception UE transmits a sensing measurement result to the SF according to the sensing configuration. The SF can acquire the sensing measurement result from the reception UE. The whole processing from step ST1546 to step ST1561 is referred to as sensing measurement processing in step ST1594.

In step ST1563, the SF derives a sensing result from the sensing measurement result received from the reception UE. In step ST1565, the SF may determine whether or not the sensing has been successful. The SF may derive a target missing detection rate or a false alarm rate. In step ST1565, the SF that has determined that the sensing has failed performs sensing again. For example, the SF may perform transmission of a sensing configuration request to the transmission base station in step ST1593 again. As another method, for example, the SF may reconfigure a sensing configuration and perform again from the step of transmitting the sensing configuration to the transmission base station and each reception UE. As another method, for example, the SF may perform again from the step of transmitting a sensing request to the transmission base station and each reception UE. When the sensing has failed, sensing is possible again.

In step ST1571, the SF transmits the derived sensing result to the AMF. In step ST1572, the AMF transmits the sensing result to the gateway. In ST1573, the gateway transmits a sensing result to the external apparatus. The sensing result may include not only the sensing result but also the identifier of the sensing request. For which sensing request the sensing result is can be recognized. A plurality of sensing requests may be performed. This is effective when a plurality of sensing requests are performed. The whole processing from step ST1571 to step ST1573 is referred to as sensing result reporting processing in step ST1595.

To derive a sensing result of a sensing target, location information of each reception UE may be used. A method of using location information of a UE in sensing processing will be disclosed.

The LMF transmits location information of each sensing-related UE to the SF. The LMF may transmit the location information of the sensing-related UE together with sensing-related UE information or by including the location information in the sensing-related UE information. In this way, the SF can acquire the location information of the sensing-related UE. The SF can acquire the location information of the reception UE.

The SF that has acquired the sensing measurement result from the reception UE may use the location information of each reception UE to derive a sensing result. A sensing result that requires location information of each reception UE can be derived.

The SF may request the location information of each reception UE from the LMF. For example, the SF may transmit the request to the LMF upon receipt of a sensing measurement result from the reception UE. This request may include identification information of the reception UE and sensing measurement time information included in the sensing measurement result of the UE. The LMF derives location information of each reception UE in a sensing measurement time or a time closest to the sensing measurement time. The LMF transmits the derived location information to the SF. The LMF may transmit a response to the request to the SF and include the location information of the reception UE in the response. In this way, a more accurate sensing result can be obtained even when the UE moves.

The LMF may transmit the location information of a sensing-related base station to the SF. The LMF may transmit the location information of the sensing-related base station together with sensing-related base station information or by including the location information in the sensing-related base station information. In this way, the SF can acquire the location information of the sensing-related base station. The SF can acquire the location information of the transmission base station.

The SF that has acquired the sensing measurement result from the reception UE may use the location information of the transmission base station to derive a sensing result. A sensing result that requires location information of the transmission base station can be derived.

The SF may request the location information of the transmission base station from the LMF. For example, the SF may transmit the request to the LMF upon receipt of a sensing measurement result from the reception UE. This request may include identification of the transmission base station, identification information of the reception UE, and sensing measurement time information included in the sensing measurement result of the UE. The LMF derives location information of the transmission base station in a sensing measurement time or a time closest to the sensing measurement time. The LMF transmits the derived location information to the SF. The LMF may transmit a response to the request to the SF and include the location information of the transmission base station in the response. In this way, a more accurate sensing result can be obtained even when the transmission base station moves.

Each sensing-related UE may be limited to a UE having location information. The LMF may limit, when deriving a sensing-related UE, the sensing-related UE to a UE having location information. Alternatively, the sensing-related UE may be limited to a UE in the middle of location information acquisition processing (UE in the middle of location management). In this way, location information of each reception UE can be used for sensing processing.

The UE may transmit whether or not to have a location information acquisition function for location management, to an NW node. The UE may include the information indicating whether or not to have a location information acquisition function, in capability information, for transmission. For example, the UE may transmit whether or not to have a location information acquisition function at the time of registration processing, to the LMF. The LMF may determine a UE having the function as a sensing-related UE.

For example, the UE may transmit whether or not to have a location information acquisition function at the time of registration processing, to the SF. The UE may transmit the information indicating whether or not to have a location information acquisition function, together with capability information, for sensing. The SF may determine a UE having the function as a reception UE.

The LMF may initiate location information acquisition processing for the UE. Another NW node may initiate the processing. The other NW node may transmit a location information acquisition processing initiation request to the LMF. As the location information acquisition processing, UE assistance positioning processing may be used, for example. In this case, the LMF derives the location of the UE. As the location information acquisition processing, UE based positioning processing may be used, for example. In this case, the UE may derive location management information and transmit the information to the LMF. For example, this is effective to obtain newest location information when a long time has passed since the acquisition time of the location information of the UE.

The SF may initiate location information acquisition processing for the UE. For example, the SF transmits a location information acquisition processing initiation request to the LMF. This request may include information related to a target UE. For example, the information related to a target UE is the identifier of the UE or the like. The target UE may be a reception UE, for example. The LMF initiates the location information acquisition processing of the UE. The LMF derives location information of the UE. The LMF may transmit location information of the UE to the SF. The SF can use the location information of the UE for derivation of a sensing result.

The other NW node may be a transmission base station or may be a reception UE, for example. For example, when the transmission base station determines a reception UE, a location information acquisition processing initiation request of the reception UE may be transmitted.

The initiation request may be made when the SF is notified of a sensing request or when a sensing request is transmitted to the transmission base station or the reception UE, for example. A time closer to sensing measurement can be measured.

The SF may request location measurement from the reception UE. For example, the SF may include information of the request in a sensing configuration, for transmission. For example, location measurement may be included in a sensing measurement index. The reception UE may perform sensing measurement and location measurement. The reception UE may transmit a location measurement result together with a sensing measurement result to the SF. The SF may transmit the location measurement to the LMF. The LMF uses the location measurement result in the reception UE to derive location information of the reception UE. The LMF may transmit the location information of the reception UE to the SF. The SF can derive a sensing result by using the location information of the reception UE.

Each reception UE may derive location information. For example, the reception UE may use UE based positioning processing for the derivation. The reception UE transmits the derived location information to the SF. The reception UE may transmit a location measurement result together with the sensing measurement result to the SF. The SF may transmit the location information to the LMF. The SF can derive a sensing result by using the location information of the reception UE. Since the LMF need not perform location information derivation, complexity of processing can be reduced, which can reduce a signaling amount.

The UE may perform location measurement together with sensing measurement. For example, location measurement may be performed by using a resource for sensing. Alternatively, sensing measurement may be performed by using a resource for location measurement. For example, the reception UE may perform sensing measurement by using a PRS configured for location measurement. The resource for sensing and the resource for location measurement may be configured to be the same.

As another method, the resource for sensing and the resource for location measurement may be transmitted within a certain period. The reception UE performs sensing measurement and location measurement within the certain period. The certain period may be a window for sensing measurement, for example. Alternatively, the certain period may be a window for location measurement. The window for sensing measurement and the window for location measurement may be configured to be the same.

Adjustment of resource configuration for sensing and resource configuration for location measurement may be performed by the SF. The LMF may transmit a resource configuration for location measurement to the SF. The SF uses the received configuration to configure the resource for sensing. Adjustment of window configuration for sensing measurement and window configuration for location measurement may be performed by the SF. The LMF may transmit a window configuration for location measurement to the SF. The SF uses the received configuration to configure the window for sensing.

Adjustment of resource configuration for sensing and resource configuration for location measurement may be performed by the LMF. The SF may transmit a resource configuration for sensing measurement to the LMF. The LMF uses the received configuration to configure the resource for location measurement. Adjustment of window configuration for sensing measurement and window configuration for location measurement may be performed by the LMF. The SF may transmit a window configuration for sensing measurement to the LMF. The LMF uses the received configuration to configure the window for location measurement.

The SF may transmit a request for change of a resource for location measurement to the LMF. This request may include information related to the resource for location measurement for which the change is requested. The information may be information for identifying the resource for location measurement, for example. The LMF that has received the request may change the resource for location measurement. Information related to the resource for location measurement may be used. The LMF may transmit a changed resource configuration for location measurement to the SF. Only the changed resource configuration for location measurement may be transmitted. The SF can recognize the changed resource configuration for location measurement. For example, when the resource for location measurement and the resource for sensing collide, the SF can request the LMF to change the resource for location measurement. Collision of the resources can be prevented.

The LMF may transmit a request for change of a resource for sensing, to the SF. This request may include information related to the resource for sensing for which the change is requested. The information may be information for identifying the resource for sensing, for example. The SF that has received the request may change the resource for sensing. Information related to the resource for sensing may be used. The SF may transmit the changed resource configuration for sensing to the LMF. Only the changed resource configuration for sensing may be transmitted. The LMF can recognize the changed resource configuration for sensing. For example, when the resource for sensing and the resource for location measurement collide, the LMF can request the SF to change the resource for sensing. Collision of the resources can be prevented.

In this way, location measurement processing can be executed together with sensing measurement processing in the reception UE. Location information can be derived by using a location measurement result acquired with sensing measurement, and a sensing result can derive by using the location information. A more accurate sensing result can be derived.

When the UE performs both sensing measurement and location measurement, the sensing measurement may be performed by using an NLOS path while performing location measurement by using an LOS path. The sensing measurement and the location measurement may be performed by using the same beam. Both the sensing measurement and the location measurement may be performed by using the same resource. For example, the transmission base station may transmit resources for sensing and location measurement by using the same beam. The transmission base station may use a beam having an LOS path and an NLOS path both being preferable in the reception UE.

In this way, a time between the sensing measurement and the location measurement can be reduced, which can reduce the time required for derivation of a sensing result.

With the end of the sensing processing, the location information acquisition processing may be ended. For example, the SF may transmit a sensing end notification to the LMF. The LMF that has received the end notification may end the location information acquisition processing for the sensing-related UE.

The SF may transmit a request for end of the location information acquisition processing to the LMF. With the end of the sensing processing, this transmission may be performed. The LMF performs end processing of the location information acquisition processing.

The location information acquisition processing may be ended or need not be ended in response to the end of sensing processing. The LMF may determine whether or not to end the location information acquisition processing according to the end of the sensing processing. For example, when the location information acquisition processing is performed in another service, the processing continues to be executable.

In this way, location information of the reception UE can be acquired in the sensing processing, and a sensing result can be derived by using the location information of the reception UE. For example, unless location information of the reception UE is known, it is not clear at which location a sensing measurement result has been measured, which may cause a problem of not being able to derive the location of a sensing target. Such a problem can be solved.

Use of location information of a UE in sensing processing has been disclosed. However, location management information other than location information, such as speed information of a UE, may be used. Location management information other than location information may be used with location information. For example, by using location information and speed information of a UE, a more accurate sensing result can be obtained.

With the method as disclosed in the present embodiment, sensing of a target using a UE and a base station is possible. In a mobile communication system, sensing as well as communication can be executed. A sensing service can be provided by using a mobile communication system infrastructure. This eliminates the necessity of constructing another infrastructure for sensing, which can provide sensing service at low cost. This also allows a sensing result to be used in a mobile communication system. For example, sensing information of an obstacle and the like can be used to perform selection and control of a direction of a transmission beam, and the like. Thus, optimization of an NW can be performed. A higher communication performance can be obtained.

### Second Embodiment

In the present embodiment, another method of solving the problem disclosed in the first embodiment will be disclosed.

In a second embodiment, a base station(s) present in a sensing area is derived from information related to a sensing area. A base station present in a neighborhood of the sensing area, a base station possible to execute sensing processing, or a base station possible to transmit a sensing resource may be derived. A part of or all of these base stations may be determined as a sensing-related base station(s). As the information related to a sensing area, information related to a certain area may be used. The number of base stations to be derived may be one or more than one.

An LMF may derive a sensing-related base station from the information related to a sensing area. The LMF has recognized location information of the base station. The LMF may acquire location information of the base station from another NW node or a management node having location information of the base station. By using the LMF, a sensing-related base station can be identified. The sensing-related base station may be a base station having location information within a certain time. The sensing-related base station may be a base station having newest location information. The sensing-related base station may be a base station executing location management or executing location measurement. By using a base station having newer location information, more accurate sensing is possible.

In the first embodiment, it is disclosed that a node to perform sensing request may transmit the information related to a sensing area to the LMF. The node to perform sensing request may request the LMF to provide sensing-related base station information. For information included in this request, information included in a request provided of provision of a sensing-related UE may be applied as appropriate. By using these pieces of information, the LMF can derive a sensing-related base station.

The LMF transmits information related to the derived sensing-related base station, to the SF. Examples of the information related to a sensing-related base station include information for identifying a base station (for example, the identifier of the base station, the identifier of a cell, or the like), location management information (such as location information or speed information) of the base station, information on whether or not the base station is within the sensing area, and the distance of the base station from the sensing area. For a transmission method, the method of transmitting information related to a sensing-related UE or the method of transmitting information related to a sensing-related base station disclosed in the first embodiment may be applied as appropriate. For example, the transmission may be performed via a gateway. For example, transmission may be performed via an AMF. The sensing request may include the information related to the sensing-related base station. The SF can acquire the information related to the sensing-related base station. The SF may use information related to a sensing-related base station, to determine a transmission base station.

The SF may transmit a request for sensing configuration to the transmission base station. This request may include the information related to a sensing area. This request may include information included in the sensing request. The transmission base station that has received the request performs sensing configuration. The SF may request provision of sensing-related UE information to the base station. The transmission base station that has received the request derives a sensing-related UE. The request for sensing configuration may include a sensing-related UE information provision request. Alternatively, the sensing-related UE information provision request may include the request for sensing configuration.

The transmission base station derives a sensing configuration. The transmission base station may derive a sensing-related UE. The number of sensing configurations and the number of sensing-related UEs may each be more than one without being limited to one as disclosed in the first embodiment. The transmission base station determines a beam to a sensing area. The transmission base station may use information related to the sensing area, for example, to determine a beam to the sensing area. The beam to the sensing area may be determined as a beam to be used for sensing. A beam for communication may be used for a beam for sensing.

The transmission base station derives a UE that performs communication by using the determined beam for sensing. For example, the transmission base station may use a measurement result report for an SSB, a CSI-RS, or a PRS of the beam from the UE to derive the UE. The transmission base station may also use information included in the sensing request to derive the UE. The derived UE may be determined as a sensing-related UE. In this way, the transmission base station can derive a sensing-related UE.

The transmission base station may derive a UE that performs communication by using a beam adjacent to the determined beam for sensing. For example, the transmission base station may use a measurement result report for an SSB, a CSI-RS, or a PRS of the beam from the UE, to derive the UE. The UE may be derived in combination with the method described above. The derived UE may be determined as a sensing-related UE. In this way, the transmission base station can derive a sensing-related UE.

The transmission base station that has determined the beam for sensing derives a sensing configuration. For example, as information related to the sensing configuration, the determined beam for sensing, a sensing resource in the beam, and the like may be configured. The transmission base station may use the derived sensing-related UE information. In this way, the transmission base station can determine a sensing configuration.

The transmission base station transmits information related to the determined sensing configuration and information related to the sensing-related UE, to the SF.

The transmission base station may perform beam sweeping. The method disclosed in the first embodiment may be used as appropriate. For example, the transmission base station may determine the beam for sensing determined by using the information related to the sensing area, and a plurality of beams nearby, as beams for sensing. The plurality of sensing beams may be swept. The transmission base station may transmit, in each of the plurality of determined beams for sensing, a sensing resource configured for the beam. The transmission base station performs sensing configuration including pieces of resource information for sensing, pieces of QCL information, and the like on the plurality of beams. In this way, a sensing configuration to be used for detection of a sensing target can be derived. The transmission base station may transmit the sensing configuration to the SF.

The transmission base station derives a UE that performs communication by using the plurality of determined beams for sensing. The UE may be determined as a sensing-related UE. The transmission base station may transmit information related to the sensing-related UE, to the SF.

In the first embodiment, it is disclosed that a transmission base station may select a beam having a path corresponding to NLOS, as a beam for sensing. Also in the present embodiment, the methods may be applied as appropriate. For example, the transmission base station derives a UE possible to perform reception by using a path corresponding to NLOS of the determined beam for sensing. The UE possible to perform reception by using a path corresponding to NLOS may be determined as a sensing-related UE. In this way, a path corresponding to NLOS can be used as a beam for sensing to a reception UE. The reception UE can receive reflected waves from a target, for measurement.

An SF uses information related to a sensing-related UE to determine a reception UE. The SF transmits information related to the determined reception UE to a transmission base station. The SF transmits the information related to a sensing configuration to a reception UE. For a method in which the SF transmits the information related to the sensing configuration to the reception UE, the method disclosed in the first embodiment may be applied as appropriate.

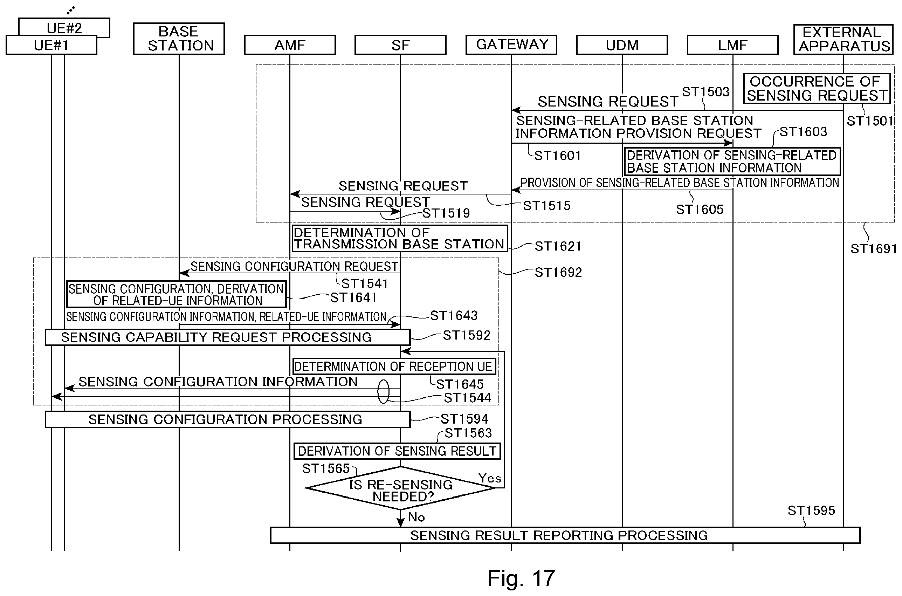

Fig. 17 is a diagram illustrating another sequence example of the sensing processing. Disclosed is an example where an LMF derives sensing-related base station information. The same step numbers are applied to the steps common in Fig. 15 and Fig. 16, and the common description thereof is omitted.

In step ST1501, a sensing request occurs in an external apparatus. In step ST1503, the external apparatus transmits a sensing request to a gateway. Thereafter, in step ST1601, the gateway transmits a sensing-related base station information provision request to an LMF. This request may include the information related to the sensing area. This request may include another piece of information included in the sensing request. In step ST1603, the LMF derives sensing-related base station information. For the derivation of the sensing-related base station information, the information related to the sensing area may be used. The number of sensing-related base stations may be more than one without being limited to one. For example, a maximum value of the number of sensing-related base stations may be provided. For example, the maximum value may be provided for a mobile communication system. The LMF derives a sensing-related base station within the maximum value. By providing the maximum value, complexity of sensing processing can be reduced.

In step ST1605, the LMF transmits a response to the sensing-related base station information provision request, to the gateway. This response may include the sensing-related base station information. Even if the sensing target is not a UE, the gateway can acquire information related to a base station UE possible to be used for sensing.

In step ST1515, the gateway transmits a sensing request to the AMF serving the sensing-related base station. The number of AMFs may be more than one without being limited to one. The request may include information indicating that this is a sensing request and information on the sensing-related base station served by the AMF. In step ST1519, the AMF transmits a sensing request to the SF. The request may include information indicating that this is a sensing request, information included in the sensing request, and sensing-related base station information. The whole processing from step ST1501 to step ST1519 is referred to as sensing request processing in step ST1691.

The SF determines a transmission base station in step ST1621. The SF may determine one transmission base station. The SF may use information included in the sensing request to derive the transmission base station.

In step ST1541, the SF transmits a sensing configuration request to the transmission base station. The request may include information indicating that this is a request for a sensing configuration. The transmission base station that has received the sensing configuration request performs sensing configuration in step ST1641. The transmission base station derives each sensing-related UE. In step ST1643, the transmission base station transmits sensing configuration information and sensing-related UE information to the SF. The SF can acquire the sensing configuration information and the sensing-related UE information. In step ST1592, the SF and the UEs perform sensing capability request processing.

In step ST1645, the SF determines a reception UE. The SF may determine one or a plurality of reception UEs. The SF may use the sensing configuration information and the sensing-related UE information received from the transmission base station, to derive the reception UE. The SF may use information included in the sensing request received from the AMF, for the derivation of the reception UE. The SF may use the capability information of the sensing-related UE acquired in step ST1592, for the derivation of the reception UE. In step ST1544, the SF transmits sensing configuration information to the reception UE. The reception UE can acquire the sensing configuration information. The whole processing from step ST1541 to step ST1544 is referred to as sensing configuration processing in step ST1692. The processing in step ST1594 to the processing in step ST1595 subsequent to step ST1692 are similar to those in Fig. 16.

As disclosed in the first embodiment, the SF may perform a part of or the entire sensing configuration.

In this way, sensing of a target using a UE and a base station is possible.

An AMF may determine a reception UE. For example, the SF may determine a transmission base station, and the AMF determines a reception UE. For this method, the method disclosed in the first embodiment may be applied as appropriate. Similar effects as those disclosed in the first embodiment can be obtained.

A transmission base station may determine a reception UE. The transmission base station derives a UE that performs communication by using one or a plurality of determined beams. A part or all the determined UEs are determined as a reception UE(s). The transmission base station may transmit information related to the reception UEs, to the SF. The SF can omit processing for determining a reception UE.

The transmission base station may transmit the sensing configuration to the determined reception UEs. Since the SF need not transmit the sensing configuration to the reception UE(s), processing can be simplified, and a signaling amount can be reduced.

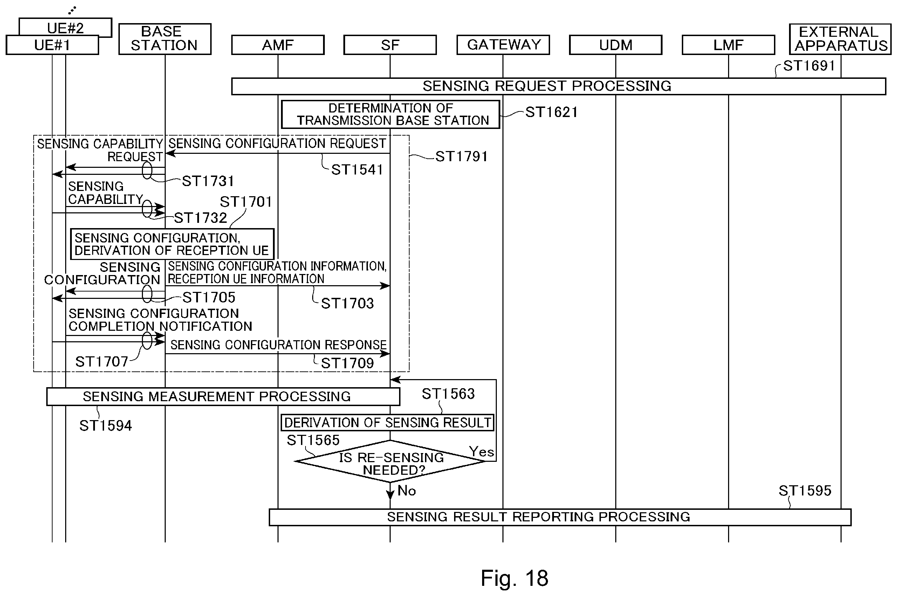

Fig. 18 is a diagram illustrating another sequence example of the sensing processing. Disclosed is an example where an LMF derives sensing-related base station information. An example where the transmission base station transmits a sensing configuration to reception UEs is disclosed. The same step numbers are applied to the steps common in Fig. 15, Fig. 16, and Fig. 17, and the common description thereof is omitted.

In step ST1691, sensing request processing is performed. In step ST1621, an SF determines a transmission base station. Thereafter, in step ST1541, the SF transmits a sensing configuration request to the transmission base station. The request may include information indicating that this is a request for a sensing configuration. The transmission base station that has received the sensing configuration request transmits a sensing capability request to the serving UE in step ST1731. In step ST1732, each UE that has received the request transmits sensing capability to the transmission base station. The transmission base station that has received the sensing configuration request in step ST1541 derives a sensing configuration and a reception UE in step ST1701. The transmission base station that has received the sensing configuration request may transmit to the sensing-related UE, after deriving the sensing configuration and/or the sensing-related UE, a request for sensing capability. The sensing-related UE may transmit sensing capability to the transmission base station. In step ST1703, the transmission base station transmits a sensing configuration and reception UE information to the SF. The SF can acquire the sensing configuration information and the reception UE information.

In step ST1705, the transmission base station transmits sensing configuration information to each reception UE. The reception UE can acquire the sensing configuration. In step ST1707, the reception UE may transmit sensing configuration completion to the transmission base station. The transmission base station can recognize that the reception UE has received the sensing configuration and completed the configuration. In step ST1709, the transmission base station transmits a sensing configuration response to the SF. The response may include information indicating sensing configuration completion in the reception UE. The response may include the sensing configuration information and the information related to the reception UE. The processing in step ST1703 may be omitted, and the SF can acquire the sensing configuration information and the reception UE information in step ST1709. The whole processing from step ST1541 to step ST1709 is referred to as sensing configuration processing in step S1791.

In this way, sensing of a target using a UE and a base station is possible.

By using a method as that disclosed in the present embodiment, similar effects as those disclosed in the first embodiment can be obtained. By determining a transmission base station first, based on information related to a sensing area and information included in a sensing request, processing for deriving a sensing-related UE and a reception UE can be facilitated, for example.

It has been disclosed that the LMF may derive a sensing-related base station from information related to a sensing area. However, this is not limited to the LMF, and an NW node or a management node having location information of a base station may derive a sensing-related base station from the information related to a sensing area. It is only needed to substitute, in the method disclosed above, the NW node or the management node for the LMF. Similar effects can be obtained.

As another method for solving the problem disclosed in the first embodiment, a sensing-related UE and a sensing-related base station may be derived from the information related to a sensing area. The LMF may derive a sensing-related UE and a sensing-related base station. For a method of executing sensing by using sensing-related UE information and sensing-related base station information, the methods disclosed in the first embodiment and the second embodiment may be applied as appropriate. For example, in step ST1505 in Fig. 15, the gateway may make the sensing-related base station information provision request illustrated in step ST1601 in Fig. 17 as well as the sensing-related UE information provision request, to the LMF. The LMF derives sensing-related UE information and sensing-related base station information, to transmit the pieces of information to the SF via the gateway and the AMF. The processing in step ST1517 can be omitted. In this way, similar effects as those disclosed in the first embodiment and the second embodiment can be obtained. By the LMF deriving a sensing-related UE and a sensing-related base station, in sensing of a certain area, a transmission base station and a reception UE suitable for the area can be selected, to thereby be able to obtain a preferable sensing result, for example.

### Third Embodiment

In the present embodiment, another method of solving the problem disclosed in the first embodiment will be disclosed.

A sensing-related base station is derived from information related to a certain base station neighborhood. The information related to a certain base station neighborhood included in a sensing request may be used for the derivation. An LMF may derive a sensing-related base station from the information related to a certain base station neighborhood. For example, the LMF may derive location information of the certain base station and may derive a base station in a neighborhood of the derived location information. The certain base station and the base station in a neighborhood of the base station may be determined as sensing-related base stations.

For a method of executing sensing by using sensing-related base station information, the method disclosed in the second embodiment may be applied as appropriate.

Another method will be disclosed. A sensing-related UE is derived from information related to a certain base station neighborhood. An LMF may derive a sensing-related UE. The LMF derives location information of a certain base station and derives a UE present in a neighborhood of the derived location information. The UE may be determined as a sensing-related UE.

For a method of executing sensing by using sensing-related UE information, the method disclosed in the first embodiment may be applied as appropriate.

Another method will be disclosed. An LMF may derive a sensing-related base station and a sensing-related UE from information related to a certain base station neighborhood. For a method of executing sensing by using sensing-related base station information and sensing-related UE information, the methods disclosed in the first embodiment and the second embodiment may be applied as appropriate.

Another method will be disclosed. A node configured to initiate sensing request transmits information related to a certain base station, to a node configured to register information on an AMF serving a base station. For example, for an external apparatus to initiate sensing request, a gateway may transmit the information. Examples of the node configured to register information on an AMF serving a base station include a management node (such as an MnS or an OAM) and the like. The node derives, from the information related to the certain base station, the AMF serving the base station. The node may derive an adjacent base station of the certain base station. The adjacent base station may be determined as a base station served by the AMF serving the certain base station.

The node transmits information related to the certain base station and the adjacent base station derived, to the SF. The information related to the certain base station and the adjacent base station may be determined as sensing-related base station information. The node may transmit the information related to the certain base station and the adjacent base station derived, to the SF via the AMF. The node may transmit information related to the certain base station and the adjacent base station, to the SF via a gateway. The node transmits information related to the AMF and the sensing-related base station information, to the gateway. The gateway uses the received information related to the AMF, to transmit a sensing request to the AMF. This request may include the sensing-related base station information. The AMF transmits a sensing request to the SF. This request may include the sensing-related base station information. In this way, a sensing request can be transmitted from an AMF suitable for a corresponding sensing-related base station to the SF.

For a method of executing sensing by using sensing-related base station information, the method disclosed in the second embodiment may be applied as appropriate.

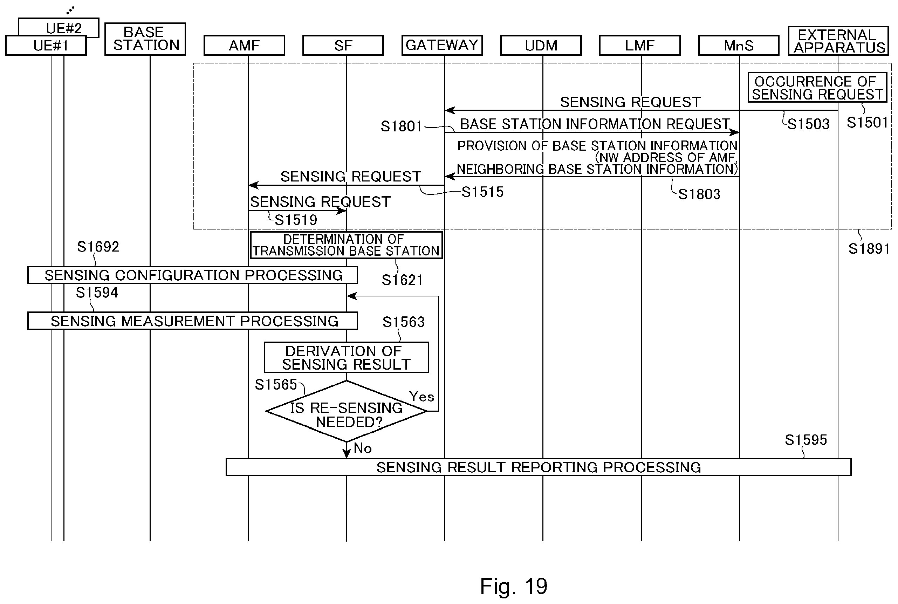

Fig. 19 is a diagram illustrating another sequence example of the sensing processing. Disclosed is an example where sensing processing is executed without involving an LMF. The same step numbers are applied to the steps common in Fig. 15, Fig. 16, and Fig. 17, and the common description thereof is omitted.

In step ST1501, a sensing request occurs in an external apparatus. In step ST1503, the external apparatus transmits a sensing request to a gateway, and the gateway receives the sensing request. The sensing request may include information related to a certain base station, as information related to a sensing area, for example. In step ST1801, the gateway transmits a base station information request to an MnS. This request may include the information related to a sensing area. This request may include the information related to a certain base station. The MnS that has received the request derives information related to an AMF serving the certain base station and sensing-related base station information. In step ST1803, the pieces of information are transmitted to the gateway as base station information.

Information related to a certain area may be included as information related to a sensing area. The MnS may derive a sensing-related base station from the information related to the certain area and derives information related to an AMF serving the base station.

The gateway uses the received information related to the AMF, to transmit a sensing request to the AMF in step ST1515. In step ST1519, the AMF transmits a sensing request to the SF. The AMF may include sensing-related base station information in the request, for transmission. This request may include information included in the sensing request. The whole processing from step S1501 to step ST1519 is referred to as sensing request processing in step ST1891. In step ST1621, the SF can determine a transmission base station from the sensing-related base station information. The processing in step ST1594, the processing in step ST1563, the processing in step ST1565, and the processing in step ST1595 subsequent to step ST1692 are similar to those in Fig. 15 to Fig. 18.

In this way, the SF can acquire sensing-related base station information without using an LMF.

In this way, for example, when information such as a certain base station neighborhood is included in a sensing request, sensing of a target using a UE and a base station is possible. For example, a neighborhood of a certain base station can be used as a sensing target. For example, sensing with the certain base station as a transmission base station can be performed. In a mobile communication system, sensing as well as communication can be executed.

### Fourth Embodiment

In the present embodiment, another method of solving the problem disclosed in the first embodiment will be disclosed.

A sensing-related base station is derived from information related to a certain UE neighborhood. The information related to a certain UE neighborhood included in a sensing request may be used for the derivation. An LMF may derive a sensing-related UE from the information related to a certain UE neighborhood. For example, the LMF may derive location information of the certain UE and may derive a UE in a neighborhood of the derived location information. The certain UE and the UE in the neighborhood of the certain UE may be determined as sensing-related UEs. For example, a UE within a certain distance from the certain UE may be determined as a UE being in the neighborhood. For example, a UE within a certain area in which the certain UE is present may be determined as the UE. The certain distance may be determined in a standard or the like, or an SF may determine the certain distance and notify the LMF of the distance. Alternatively, an external apparatus, an NW node, or a management node that initiates sensing processing may determine the distance and notify the LMF of the distance.

The LMF may derive a sensing-related base station from the information related to a certain UE neighborhood. For example, the LMF may derive location information of the certain UE and may derive a base station in a neighborhood of the derived location information. The base station in the certain UE neighborhood may be a sensing-related base station.

For example, the gateway may transmit the information related to a certain UE neighborhood included in a sensing request, to the LMF. The LMF may use the information to derive sensing-related UE information. The LMF may derive sensing-related base station information.

For a method of executing sensing by using sensing-related UE information and sensing-related base station information, the methods disclosed in the first embodiment and the second embodiment may be applied as appropriate.

The gateway may request provision of information on a certain UE from a UDM. The request may include the identifier of the certain UE. The UDM that has received the request transmits the information on the certain UE to the gateway.

The gateway uses the information on the AMF serving the certain UE received from the UDM, to transmit a sensing request to the AMF. In this way, for example, even when the gateway has not recognized the AMF serving the certain UE, the AMF can receive the sensing request.

The AMF may transmit a sensing-related UE information provision request to the LMF. The AMF may transmit the sensing-related base station information provision request to the LMF. The AMF may include the request in one message, for transmission. The request may include information related to a certain UE neighborhood included in a sensing request. This request may include the information related to the certain UE received from the UDM. The AMF may transmit the request to the LMF via the SF. The LMF may use the information to derive sensing-related UE information. The LMF may use the information to derive sensing-related base station information.

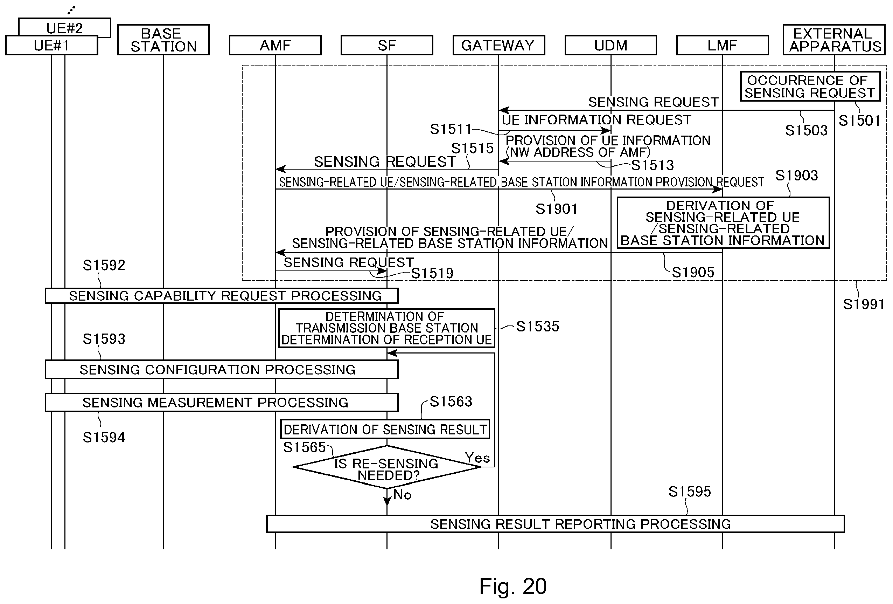

Fig. 20 is a diagram illustrating another sequence example of the sensing processing. Disclosed is an example where an LMF derives sensing-related UE information and sensing-related base station information. Also disclosed is a case of using an interface between an AMF and the LMF. The same step numbers are applied to the steps common in Fig. 15 and Fig. 16, and the common description thereof is omitted.

In step ST1501, a sensing request occurs in an external apparatus. A gateway that has received the sensing request from the external apparatus in step ST1503 transmits a UE information request to a UDM in step ST1511 and obtains UE information from the UDM in step ST1513. Thereafter, in step ST1515, the gateway transmits a sensing request to an AMF. In step ST1901, the AMF transmits a sensing-related UE information and sensing-related base station information provision request, to the LMF. An interface between the AMF and the LMF may be used for the transmission. In step ST1903, the LMF derives sensing-related UE information and sensing-related base station information. In step ST1905, the LMF transmits sensing-related UE information and sensing-related base station information, to the AMF. In step ST1519, the AMF transmits a sensing request to the SF. The whole processing from step S1501 to step ST1519 is referred to as sensing request processing in step ST1991.

In this way, even when no interface is provided between the gateway and the LMF, communication with the LMF is possible. Sensing-related UE information and sensing-related base station information can be acquired from the LMF. Sensing of a target using a UE and a base station is possible.

Another method will be disclosed. The gateway transmits a sensing request to an AMF. The AMF may derive sensing-related base station information from the information related to a certain UE neighborhood. The AMF derives a base station serving the certain UE. The AMF may derive a base station adjacent to the base station. Such a base station may be determined as a sensing-related base station. The certain UE may be determined as a sensing-related UE.

The AMF transmits a sensing request to an SF. This request may include the sensing-related base station information and/or sensing-related UE information. In this way, the SF can acquire sensing-related base station information and sensing-related UE information without involving an LMF. It is possible to attempt to simplify processing and reduce signaling load in the LMF.

For a method of executing sensing by using sensing-related UE information and sensing-related base station information, the methods disclosed in the first embodiment and the second embodiment described above may be applied as appropriate.

When the number of certain UEs is one, derivation of a sensing-related UE may be performed by a transmission base station. For a sensing method using this method, the method disclosed in the second embodiment may be applied as appropriate.

In this way, for example, when information such as a certain UE neighborhood is included in a sensing request, sensing of a target using a UE and a base station is possible. For example, a neighborhood of a certain UE can be used as a sensing target. For example, sensing with the certain UE as a reception UE can be performed. In a mobile communication system, sensing as well as communication can be executed.

### Fifth Embodiment

In the present embodiment, another method of solving the problem disclosed in the first embodiment will be disclosed.

In the first embodiment, it is disclosed that a sensing request from an external apparatus or an AF is transmitted from an AMF to an SF. The present embodiment discloses another method.

A sensing request is transmitted to an SF without involving an AMF. A node that has initiated sensing request transmits a sensing request to the SF, and this transmission to the SF does not involve the AMF. For example, the external apparatus may transmit the sensing request to the SF via a gateway.

The SF requests an LMF to provide sensing-related UE information. An interface may be provided between the SF and the LMF. The interface may be used for transmission of signaling between the SF and the LMF. The SF may request the LMF to provide sensing-related base station information. The LMF that has received the request from the SF derives sensing-related UE information and/or sensing-related base station information. The LMF transmits the sensing-related UE information and/or the sensing-related base station information thus derived, to the SF. In this way, the SF can acquire the information from the LMF.

The SF uses the sensing-related UE information and sensing-related base station information, to determine a reception UE and a transmission base station.

The SF may request the UDM to provide information related to a reception UE. This request may include the information on the reception UE determined by the SF. The UDM derives information related to the UE from the UE information. The UDM may transmit the derived information related to the UE, to the SF. In this way, the SF can acquire information related to an AMF serving the reception UE. The SF can select an AMF to transmit a sensing request to. The SF may transmit a sensing request to the selected AMF.

The SF may request the UDM to provide the information on the UE. The SF may request the UDM to provide information related to a sensing-related UE. This request may include the sensing-related UE information. The UDM derives information related to the UE from the UE information. The UDM may transmit the derived information related to the UE, to the SF. In this way, the SF can acquire information related to an AMF serving a sensing-related UE. For example, the SF may perform this processing before determining a reception UE. The SF may use information related to a UE received from the UDM, to determine a reception UE. The SF uses subscription information of a sensing-related UE and information on the AMF serving the UE received from the UDM, to determine a reception UE. For example, UEs served by the same AMF may be determined as reception UEs. In this way, reception UEs can be determined more flexibly.

The AMF may initiate service request for the sensing-related UE. The service request may include information indicating that this is for sensing. The sensing-related UE establishes a connection with the AMF. RRC connection with the base station may be maintained. This is effective when the sensing-related UE is not connected to the AMF or the base station, for example.

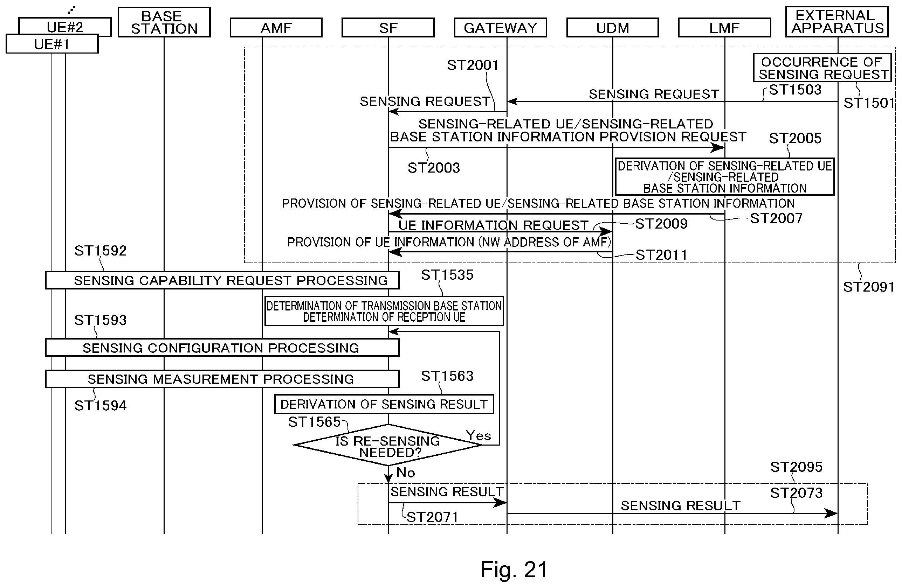

Fig. 21 is a diagram illustrating another sequence example of the sensing processing. Disclosed is an example where a sensing request is transmitted to the SF without involving an AMF. Also disclosed is an example where an LMF derives sensing-related UE information and sensing-related base station information. The same step numbers are applied to the steps common in Fig. 15 and Fig. 16, and the common description thereof is omitted.

In step ST1501, a sensing request occurs in an external apparatus. A gateway that has received the sensing request in step ST1503 transmits a sensing request to an SF in step ST2001. The gateway may have an SF selection function. In step ST2003, the SF transmits a sensing-related UE information and sensing-related base station information provision request, to the LMF. An interface between the SF and the LMF may be used for the transmission. In step ST2005, the LMF derives sensing-related UE information and sensing-related base station information. In step ST2007, the LMF transmits the sensing-related UE information and the sensing-related base station information, to the SF. The SF can acquire the sensing-related UE information and the sensing-related base station information.

In step ST2009, the SF may transmit a UE information request to a UDM. This request may include the sensing-related UE information. The UDM derives UE information on the sensing-related UE, and transmit the UE information to the SF in step ST2011. The SF can acquire the UE information on the sensing-related UE from the UDM. The whole processing from step ST1501 to step ST2011 is referred to as sensing request processing in step ST2091.

After the processing in step ST1592, the processing in step ST1535, the processing in step ST1593, and the processing in step ST1594, the SF uses a sensing measurement result acquired from each reception UE, to derive a sensing result in step ST1563. After it is determined whether or not re-sensing is needed in step ST1565, the SF transmits the sensing result to the gateway in ST2071. In ST2073, the gateway transmits a sensing result to the external apparatus. The whole processing from step ST2071 to step ST2073 is referred to as sensing result reporting processing in step ST2095.

In this way, a sensing request can be transmitted to the SF without involving an AMF. A sensing result can be transmitted to the external apparatus without involving an AMF. The SF can be notified of the sensing request at an early stage. The sensing result can be provided to the external apparatus at an early stage. Hence, sensing processing for a for a target using a UE and a base station can be executed with low delay.

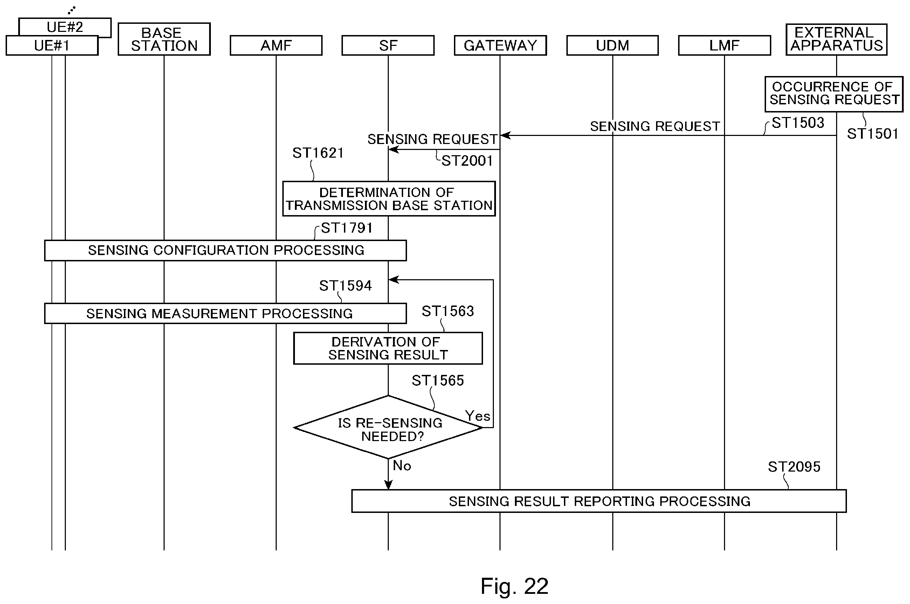

Fig. 22 is a diagram illustrating another sequence example of the sensing processing. Disclosed is an example where a sensing request is transmitted to the SF without involving an AMF. Disclosed is an example where sensing processing is executed without involving an LMF. The same step numbers are applied to the steps common in Fig. 15, Fig. 16, Fig. 18, and Fig. 21, and the common description thereof is omitted.

As disclosed in the example in Fig 21, when a sensing request occurs in an external apparatus, the sensing request is transmitted from the external apparatus to the gateway and from the gateway to the SF. The AMF is not involved. The gateway that has received the sensing request may request an MnS to provide sensing-related base station information as disclosed in the example in Fig. 19, for example.

The SF determines a transmission base station in step ST1621. For example, when the sensing request includes information related to a sensing area, and the information includes certain base station information, the SF may determine the base station as a transmission base station. Processing for requesting the MnS to provide sensing-related base station information can be omitted.

Sensing configuration processing and sensing measurement processing are performed in step ST1791 and step ST1594, it is determined whether to perform re-sensing in step ST1563 and ST1565, and a sensing result is transmitted to the external apparatus without involving the AMF in step ST2095.

In this way, effects as those disclosed in Fig. 21 can be obtained. Sensing processing can be executed without involving the LMF. Sensing processing of a target using a UE and a base station can be executed with lower delay.

By employing such a method, a sensing request from a node configured to initiate sensing request, such as an external apparatus, can be transmitted without involving an AMF. Since the SF can receive a sensing request at an early stage, the SF can execute sensing processing at an early stage. A sensing result can be transmitted to the external apparatus without involving the AMF. The node configured to initiate sensing request can acquire a sensing result at an early stage. Delay of sensing processing can be reduced. Reduction of a signaling amount between the AMF and the SF can be attempted.

### Sixth Embodiment

As described above, a target is not limited to a UE in sensing unlike communication. If the target is a UE, information related to the UE can be handled in a mobile communication system. However, when the target is not a UE, a problem of how to handle a sensing result in the mobile communication system is a problem.

In the present embodiment, a method of handling a sensing result in a mobile communication system will be disclosed.

An NW node manages a sensing result. The NW node may manage target information. For example, the target information may include the sensing result. For example, the sensing result and the target information may be associated. The NW node may be a node related to sensing processing. Examples of the node related to sensing processing include an SF, a server for sensing, an AMF, and an NWDAF. The SF may have a function of a server for sensing.

To manage a sensing result, the sensing result need be stored. A method of storing a sensing result will be disclosed.

A sensing result is stored in association with another piece of information. For example, the sensing result may be stored in association with information included in a sensing request. For example, the sensing result is stored in association with information for identifying the sensing request. It is possible to recognize for which sensing request the sensing result is.

As another method, for example, the sensing result may be stored in association with information to be used for communication of the sensing result. 10 examples of information associated with a sensing result will be disclosed below.
(1) Location information
(2) Base station information
(3) UE information
(4) Transmission node information
(5) Reception node information
(6) Information on an AMF serving a transmission base station
(7) Information on an AMF serving a reception UE
(8) Location management information of a transmission node
(9) Location management information of a reception node
(10) Combination of (1) to (9)

(1) may be information related to an area for a sensing target, for example. The information related to a sensing area and the sensing result are stored in association with each other.
(2) may be information related to a transmission base station, for example. This information may be an identifier. The information related to a transmission base station and the sensing result are stored in association with each other.
(3) may be information related to a reception UE, for example. This information may be an identifier. The information related to a reception UE and the sensing result are stored in association with each other.
(4) may be information related to a transmission node. The node may be a base station but need not be a base station. This information may be an identifier. The information related to a transmission node and the sensing result are stored in association with each other.
(5) may be information related to a reception node. The node may be a UE but need not be a UE. This information may be an identifier. The information related to a reception node and the sensing result are stored in association with each other.
(6) may be information related to an AMF serving a transmission base station. This information may be an identifier. The information related to an AMF serving a transmission base station and the sensing result are stored in association with each other.
(7) is information related to an AMF serving a reception UE. This information may be an identifier. The information related to an AMF serving a reception UE and the sensing result are stored in association with each other.
(8) is information related to location management of a transmission node. The node may be a base station but need not be a base station. For example, the information may be location information or may be speed information. The information may be any information obtained through location management. Location management information of the transmission node and the sensing result are stored in association with each other.
(9) is information related to location management of a reception node. The node may be a UE but need not be a UE. For example, the information may be location information or may be speed information. The information may be any information obtained through location management. Location management information of the reception node and the sensing result are stored in association with each other.

As described above, by associating information used for communication and a sensing result, a sensing result can be identified and stored in a mobile communication system.

Identification information identifying a target may be provided. The identification information may be assigned to the target. An NW node may assign the identification information to the target. The NW node may be an SF, an NWDAF, an AMF, a RAN node, a UE, or the like, for example. This identification information may be unique for the NW. As another method, the identification information may be created by using the identifier of each node and an identifier within the node in combination. For example, under which node the target is present or which node has been used for sensing of the target can be identified.

The identification information identifying a target may be target information. The identification information and a sensing result of the target may be stored and managed in association with each other.

In this way, even if a target is not a UE, the target can be identified in an NW, and a sensing result can be managed. This allows sensing to be executed, and a sensing result to be managed, in a mobile communication system.

### Seventh Embodiment

When a reception UE performing communication in a mobile communication system performs sensing, the reception UE must switch from the frequency band or frequency for communication to the frequency band or frequency for sensing to receive a sensing resource, for example. No trouble should occur in communication due to such switch processing and sensing resource reception processing. A method of enabling a reception UE to perform sensing during communication is needed.

In the present embodiment, a method for solving such a problem will be disclosed.

A measurement gap for sensing (referred to as an S-MGAP) is provided. An S-MGAP is configured for a reception UE. The number of S-MGAP configurations configured for the reception UE may be one or more than one. An identifier may be provided to each S-MGAP configuration. The same S-MGAP may be configured for a plurality of UEs. The reception UE executes sensing measurement in the S-MGAP.

An SF configures an S-MGAP. The SF may use the sensing configuration information received from the transmission base station, to configure the S-MGAP. The SF may configure the same S-MGAP for one or a plurality of reception UEs. The one or plurality of reception UEs can perform sensing measurement in the same S-MGAP period. Sensing measurement by the one or plurality of reception UEs is executed. An S-MGAP may be configured for each reception UE or for each plurality of reception UEs (which may be a reception UE group). Since a reception UE or reception UE group-specific configuration is made, a configuration according to a communication state of each reception UE or reception UE group is enabled.

Seven examples of the information on an S-MGAP for an S-MGAP configuration are disclosed.
(1) Gap length
(2) Gap offset
(3) Periodicity
(4) Switch time
(5) Gap timing advance
(6) Information related to a serving cell
(7) Combination of (1) to (6)

(1) is information on the period of a gap. (2) is information indicating the start time of the gap. (3) is information on periodicity of a case where the S-MGAP is repeated. (4) is information on an RF switch time in a reception UE. The time may be an allowable time. (5) is information on a time at which measurement may be started before a configure gap start time. The time may be an allowable time. The information may be a period of the gap start time and a measurement start time. Information (1) to information (5) may be indicated in time (for example, second, millisecond, or the like) or may be indicated in frame timing (for example, SFN, slot number, symbol number, clock number, or the like).

(6) is information related to a serving cell for which the S-MGAP is configured. For example, (6) may be the identifier of the serving cell. The information may be information on an MCG or an SCG. The information may be information on a PCell or a PSCell.

The SF transmits information related to an S-MGAP, to a reception UE. The SF may include the information in a sensing request, for transmission. The SF may transmit the information together with a sensing configuration or by including the information in the sensing configuration. The SF may include the information in information related to a configuration of sensing measurement, as a sensing configuration, for transmission. In this way, the reception UE can execute sensing measurement by using the S-MGAP.

The SF may transmit information related to an S-MGAP to a transmission base station. The SF may transmit the information related to an S-MGAP, to a base station serving a reception UE. The SF may transmit the information in association with the identifier of the reception UE. The base station serving the reception UE may be configured not to allocate a resource for communication to the reception UE in an S-MGAP configuration. In this way, the reception UE can execute sensing measurement without causing any trouble in communication.

The base station serving the reception UE may configure an S-MGAP. The transmission base station transmits a sensing configuration to the SF. The SF transmits the sensing configuration to the base station serving the reception UE. The SF may transmit the sensing configuration to the reception UE via the base station serving the reception UE. At this event, the SF may transmit the sensing configuration to the base station serving the reception UE. The base station serving the reception UE uses the received sensing configuration to configure an S-MGAP. The base station serving the reception UE may configure an S-MGAP for the reception UE. The base station serving the reception UE transmits information related to the S-MGAP, to the reception UE. The SF may transmit the information related to the S-MGAP at the time of transmitting the sensing configuration to the reception UE via the base station serving the reception UE. The reception UE executes sensing measurement in the S-MGAP.

The base station serving the reception UE may be configured not to allocate a resource for communication to the reception UE in an S-MGAP configuration. In this way, the reception UE can execute sensing measurement without causing any trouble in communication. Since the base station serving the reception UE configures an S-MGAP for the reception UE, an S-MGAP suitable for the load of each base station and communication of the reception UE can be configured. Communication between a reception UE and a base station and sensing measurement by the reception UE can be executed more efficiently.

When a base station serving a reception UE is a transmission base station, the transmission base station may configure an S-MGAP.

Another method in which a base station configures an S-MGAP will be disclosed. A base station serving a reception UE may transmit an S-MGAP configured for the reception UE, to an SF. The SF may transmit the S-MGAP received from the base station, to the reception UE. The SF can acquire information related to the S-MGAP configured for the reception UE. The SF can recognize in which period the reception UE performs sensing measurement.

The SF may request S-MGAP configuration from a base station serving a reception UE. This request may include sensing configuration information configured by the transmission base station. This request may include information related to the reception UE. The base station that has received the request performs the S-MGAP configuration for the reception UE. The base station may transmit the information related to the S-MGAP, to the reception UE. As another method, the base station may transmit the information related to the S-MGAP, to the SF. The base station may transmit the information related to the S-MGAP as a response to the S-MGAP configuration request from the SF.

In this way, the SF can request S-MGAP configuration. Flexible sensing control is enabled in the SF.

A reception UE may request S-MGAP configuration from an SF. The reception UE may request S-MGAP configuration via a base station serving the reception UE. This request may include the identifier of the UE itself. This request may include reason information. The reason information is information indicating a reason for requesting the S-MGAP configuration. Examples of the information include performance of sensing, a frequency for sensing and a frequency for communication being different from each other, and switch processing being needed for sensing resource reception. This request may include information related to a desired S-MGAP. The SF that has received the request may configure an S-MGAP in the method disclosed above.

A reception UE may request S-MGAP configuration from a base station. The reception UE may request S-MGAP configuration from a base station serving the reception UE. This request may include the identifier of the UE itself. This request may include reason information. This request may include information related to a desired S-MGAP. The base station that has received the request may configure an S-MGAP for the reception UE.

In this way, the reception UE can request S-MGAP configuration. S-MGAP configuration is possible according to a communication state and a load state of the reception UE.

S-MGAP execution start/execution stop (activation/deactivation) may be provided. This may be provided separately from configuration of an S-MGAP. S-MGAP execution start/execution stop may include information for identifying the S-MGAP configuration for which execution is started/execution is stopped. For example, the identifier of an S-MGAP configuration disclosed above may be included. Execution start/execution stop of one or a plurality of S-MGAP configurations among one or a plurality of S-MGAP configurations configured in advance may be performed.

The SF transmits execution start/execution stop of S-MGAP configuration to the reception UE. The reception UE performs sensing measurement by using the S-MGAP configuration for which execution is started. The reception UE stops sensing measurement using the S-MGAP configuration for which execution is stopped. The transmission from the SF to the reception UE may use signaling between the SF and the UE, for example. Alternatively, signaling between the SF and a base station or signaling between a base station and the UE may be used.

In this way, when change of an S-MGAP configuration is needed according to the state, transmission time of the S-MGAP configuration after the change and processing in the reception UE according to this, and the like are not needed, which enables processing of changing an S-MGAP configuration with low delay.

It has been disclosed that the SF performs execution start/execution stop of S-MGAP configuration. However, a base station may perform these. A base station serving a reception UE transmits execution start/execution stop of S-MGAP configuration to the reception UE. Execution start/execution stop of S-MGAP configuration can be performed by base station-UE signaling, and hence SF-UE signaling is not needed. Processing of change of an S-MGAP configuration can be performed at an earlier stage.

It has been disclosed that the SF performs execution start/execution stop of S-MGAP configuration. However, an external apparatus, an NW node, or a management node may perform these. The NW node may be an AF, for example. The external apparatus, the NW node, or the management node transmits execution start/execution stop of S-MGAP configuration to a reception UE. Transmission may be performed via the SF. Transmission may be performed via the base station. For a method of execution start/execution stop of S-MGAP configuration by the SF or the base station, the method disclosed above may be applied as appropriate. In this way, for example, an external apparatus, an NW node, or a management node that initiates sensing request can request execution start/execution stop of S-MGAP configuration. The external apparatus, the NW node, or the management node that initiates sensing request can flexibly control execution and stop of sensing processing.

When execution start/execution stop of S-MGAP configuration is provided, S-MGAP configuration may simply correspond to execution stop. By execution start of S-MGAP configuration, execution of the S-MGAP configuration is started. In this way, execution start/execution stop of S-MGAP configuration is enabled timely.

S-MGPA configuration may simply correspond to execution start. By execution end of S-MGAP configuration, execution of the S-MGAP configuration is started. In this way, a signaling amount can be reduced.

A reception UE may request execution start/execution stop of S-MGAP configuration from an SF. The reception UE may make this request via a base station serving the reception UE. This request may include the identifier of the UE itself. This request may include reason information. This request may include the identifier of the S-MGAP configuration for which execution start/execution stop is requested. The SF that has received the request may start/stop execution of the S-MGAP configuration in the method disclosed above. In this way, change of an S-MGAP configuration is enabled according to a state of the reception UE, for example.

A reception UE may request execution start/execution stop of S-MGAP configuration from a base station. The reception UE may make this request to a base station serving the reception UE. This request may include the identifier of the UE itself. This request may include reason information. This request may include the identifier of the S-MGAP configuration for which execution start/execution stop is requested. The base station that has received the request may start/stop execution of the S-MGAP configuration in the method disclosed above. In this way, timely change of an S-MGAP configuration is enabled according to a state of the reception UE, for example.

The transmission from the base station to the reception UE and the transmission from the reception UE to the base station may use signaling between the base station and the UE, for example. For example, RRC signaling may be used. A larger number of pieces of information can be transmitted. Alternatively, MAC signaling may be used. For example, information may be included in a MAC control element (CE), for transmission. Information can be transmitted at an early stage. Alternatively, L1/L2 signaling may be used. For example, information may be included in DCI or UCI, for transmission. Information can be transmitted at an earlier stage.

In this way, for example, even when a frequency band or a frequency for communication is different from a frequency band or a frequency for sensing, use of a measurement gap for sensing in sensing allows sensing to be executed without causing any trouble in communication for a reception UE. In a mobile communication system, sensing as well as communication can be executed.

A measurement gap for communication may be used as a S-MGAP. A measurement gap for communication may be configured for an S-MGAP. For a configuration method, the method described above may be used as appropriate. The reception UE performs sensing measurement by using the measurement gap for communication configured for an S-MGAP. Since the measurement gap for communication is used for an S-MGAP, information indicating that this is for sensing may be included in the configuration of the measurement gap for communication. Information indicating whether the measurement gap is for communication or for sensing may be provided. A UE that has received the measurement gap configuration can recognize whether the measurement gap is for communication or for sensing.

### Eighth Embodiment

A method of enabling a reception UE to perform sensing during communication will be disclosed.

A BWP for sensing may be provided. Sensing is performed in the BWP for sensing. The sensing resource is transmitted and received in the BWP for sensing. A BWP for sensing may be configured in the same manner as that of a BWP for communication. Sensing can be performed in the same BWP as the BWP for communication. The reception UE need not perform processing of switching frequencies between communication and sensing and the like. Complexity of sensing processing can be reduced.

A BWP for sensing may be configured in a manner different from that of a BWP for communication. Sensing can be performed in a BWP different from the BWP for communication. Since different BWPs are used in communication and sensing, malfunction can be reduced in a case where a reception UE performing communication performs sensing, for example.

An SF may configure a BWP for sensing. The number of BWPs for sensing may be one or more than one. The SF may transmit information related to the BWP for sensing, to a reception UE. For example, the information may be the identifier of the BWP for sensing. The SF may use the sensing configuration received from a transmission base station, to configure the BWP for sensing. The SF may configure the same BWP for sensing for one or a plurality of reception UEs configured to perform sensing.

A base station serving a reception UE may configure a BWP for sensing. The transmission base station transmits a sensing configuration to the SF. The SF transmits the sensing configuration to the base station serving the reception UE. The SF may transmit the sensing configuration to the reception UE via the base station serving the reception UE. At this event, the SF may transmit the sensing configuration to the base station serving the reception UE. The base station serving the reception UE uses the received sensing configuration to configure the BWP for sensing. The BWP for sensing for the reception UE may be configured. The base station serving the reception UE transmits information related to the BWP for sensing, to the reception UE. The SF may transmit the information related to the BWP for sensing at the time of transmitting the sensing configuration to the reception UE via the base station serving the reception UE. The reception UE executes sensing measurement in the BWP for sensing.

When the base station serving a reception UE is a transmission base station, the transmission base station may configure a BWP for sensing.

For sensing, change to/from a BWP for sensing may be performed by a base station serving a reception UE. The base station serving the reception UE transmits information indicating change to a BWP for sensing, to the reception UE. For example, the information may be the identifier of the BWP for sensing. For example, RRC signaling may be used. A larger number of pieces of information can be transmitted. For example, information may be included in a MAC CE, for transmission. Information can be transmitted at an early stage. For example, L1/L2 signaling may be used. For example, information may be included in DCI, for transmission. Information can be transmitted at an earlier stage.

A plurality of BWPs for sensing may be configured for a reception UE. A plurality of BWPs for sensing may be configured in advance, and information indicating change to a BWP for sensing described above may be used to indicate which BWP for sensing among the plurality of BWPs for sensing is used. In this way, a more suitable BWP for sensing can be configured at an early stage.

In this way, sensing using a BWP for sensing is possible. Complexity of sensing processing can be reduced. For example, a frequency layer for communication and a frequency layer for sensing may be configured to be the same. Different BWPs may be configured for communication and for sensing in the same frequency layer. In this way, communication and sensing can be executed in one frequency layer. Improvement of frequency resource usage efficiency can be attempted. The number of frequency layers supported by a reception UE can be reduced, which can reduce complexity of a circuit.

A window for sensing (sensing window (referred to as an S-WD)) may be provided. Sensing is performed in the S-WD. A transmission base station transmits a sensing resource in the S-WD. A reception UE performs sensing measurement in the configured S-WD.

Five examples of the information related to an S-WD are disclosed.
(1) BWP
(2) Sensing resource configuration
(3) Information related to a time of the S-WD
(4) Identifier
(5) Combination of (1) to (4)

(1) is information related to a BWP in which the S-WD is configured. For example, (1) may be the identifier of the BWP. (2) is a sensing resource configuration used in the S-WD. (2) may be information related to a sensing resource. (2) may be information for identifying the sensing resource, for example. (2) may be the identifier of the sensing configuration, for example. (3) may be the period of the S-WD or an offset, for example. (3) may be a start time and an end time of the S-WD, for example. (4) may be information for identifying the S-WD. This enables indication of which S-WD is to be used, when a plurality of S-WDs are configured.

The number of S-WD configurations may be one or more than one. By enabling a plurality of configurations, sensing can be executed by using a more suitable S-WD configuration according to a communication state in a reception UE.

An SF may configure an S-WD. The number of S-WDs may be one or more than one. The SF may transmit information related to the S-WD, to a reception UE. The SF may configure an S-WD by using a sensing configuration received from a transmission base station. The SF may configure the same S-WD for one or a plurality of reception UEs configured to perform sensing.

An S-WD may be configured by a base station serving a reception UE. The transmission base station transmits a sensing configuration to the SF. The SF transmits the sensing configuration to the base station serving the reception UE. The SF may transmit the sensing configuration to the reception UE via the base station serving the reception UE. At this event, the SF may transmit the sensing configuration to the base station serving the reception UE. The base station serving the reception UE uses the received sensing configuration to configure an S-WD. An S-WD may be configured for the reception UE. The base station serving the reception UE transmits information related to the S-WD, to the reception UE. The SF may transmit the information related to the S-WD at the time of transmitting the sensing configuration to the reception UE via the base station serving the reception UE. The reception UE executes sensing measurement in the S-WD.

When a base station serving a reception UE is a transmission base station, the transmission base station may configure an S-WD.

For sensing, change of an S-WD may be performed by the base station serving the reception UE. The base station serving the reception UE transmits information indicating change to an S-WD, to the reception UE. This information may be the identifier of the S-WD, for example. For example, RRC signaling may be used. A larger number of pieces of information can be transmitted. For example, information may be included in a MAC CE, for transmission. Information can be transmitted at an early stage. For example, L1/L2 signaling may be used. For example, information may be included in DCI, for transmission. Information can be transmitted at an earlier stage.

A plurality of S-WDs may be configured for a reception UE. A plurality of S-WDs may be configured in advance, and information indicating change to an S-WD described above may be used to indicate which S-WD among the plurality of S-WDs is used. In this way, a more suitable S-WD can be configured at an early stage.

In this way, sensing using an S-WD is possible. Complexity of sensing processing can be reduced. For example, a BWP for communication and a BWP for sensing may be configured to be the same. By configuring an S-WD for sensing in the same BWP, communication and sensing can be executed in one BWP. Improvement of frequency resource usage efficiency can be attempted. The number of BWPs supported by a reception UE can be reduced, which can reduce complexity of a circuit.

### Ninth Embodiment

QoS different from that of communication is required in sensing. The present embodiment discloses a method of configuring QoS to be used for sensing will be disclosed.

14 examples of the information related to QoS for sensing will be disclosed below.
(1) Horizontal direction accuracy of location information
(2) Vertical direction accuracy of location information
(3) Response time for location information
(4) Information indicating whether or not speed is required
(5) Speed accuracy
(6) Resolution
(7) Range resolution
(8) Speed resolution
(9) Delay amount
(10) Sensing service delay
(11) Refreshing rate
(12) Missing detection rate
(13) False alarm rate
(14) Combination of (1) to (13)

The method of configuring QoS will be disclosed. An SF receives information related to QoS required for sensing from an external apparatus or an AF. The information may be an indicator such as a KPI required for sensing. For example, the external apparatus or the AF may include the information or indicator in a sensing request, for transmission to the SF. The SF may derive the information related to QoS required for sensing, the information being to be used by an NW, from the indicator such as the KPI required for sensing.

The SF transmits the information related to QoS, to a reception node. The SF may transmit the information related to QoS to the reception UE, for example. The SF may transmit the information related to QoS, to a transmission node. The SF may transmit the information related to QoS, to a transmission base station, for example. The SF may transmit the information related to QoS, to a base station serving a reception UE. The SF may transmit the information related to QoS, to an AMF. The AMF may transmit the information related to QoS, to the transmission base station and/or the base station serving the reception UE. In this way, the reception UE, the transmission base station, the base station serving the reception UE, and the AMF can recognize QoS required for sensing. For example, sensing configuration and sensing measurement can be performed to satisfy the QoS.

The information related to QoS may be included in a sensing request for transmission, may be included in a sensing configuration request for transmission, or may be included in sensing configuration information for transmission. By including the information in another message, for transmission, a signaling amount can be reduced.

The SF may transmit the information related to QoS required for sensing, to an SMF or a UPF. The SF may transmit the information related to QoS via the AMF. For example, a sensing measurement result may be transmitted by using the user plane (UP). For example, a PDU session may be provided in the UP, and the sensing measurement result may be transmitted by using the PDU session. An SMF or the UPF that has received the information related to QoS required for sensing can use the information related to QoS for data transmission control in the PDU session, for example. Appropriate control to satisfy the QoS required for sensing is enabled.

A reception UE may derive a sensing result from a sensing measurement result of the UE itself. The reception UE may use sensing measurement results of the UE itself and another reception UE to derive a sensing result. The reception UE and the other reception UE may notify each other of the sensing measurement result. An interface between the UEs may be used for the notification, for example. For example, the notification may be made via a base station. For example, the notification may be made via an SF. In this way, the reception UE can acquire the sensing measurement configuration of the other reception UE and derive a sensing result by using the sensing measurement results of the UE itself and the other reception UE. A more accurate sensing result can be obtained.

The reception UE that has derived the sensing result may transmit the sensing result by using the UP. The reception UE may transmit the sensing result to the UPF. The sensing result may be transmitted by using a PDU session. The UPF may transmit the sensing result to an external apparatus. The UPF may transmit the sensing result to a data network (DN). The DN may transmit the sensing result to the external apparatus. Appropriate control to satisfy the QoS required for sensing is enabled.

The SMF or the UPF may derive the information related to QoS required for sensing, the information being to be used by an NW, from the indicator such as the KPI required for sensing. For example, this is effective when a sensing measurement result is transmitted by using the UP. The SMF or the UPF may transmit the information related to QoS, to the reception UE. The SMF or the UPF may transmit the information to the transmission base station and the base station serving the reception UE. Transmission may be performed via the AMF. In this way, the reception UE, the transmission base station, and the base station serving the reception UE can recognize QoS required for sensing. For example, transmission of sensing measurement in the UP is enabled to satisfy the QoS.

The information related to QoS required for sensing may be measured. The reception UE, the transmission base station, the base station, the AMF, the SMF, the UPF, and/or the SF may measure a part of or all the pieces of information. As another method, any of the nodes, for example, the SF, may derive a measurement result of the information related to QoS required for sensing. From the measurement result, whether or not the QoS required for sensing is satisfied can be determined. By using the determination, the SF can perform more appropriate control, such as change of a transmission base station or change of a reception UE, to satisfy the QoS required for sensing for example.

When another node derives a measurement result of the information related to QoS required for sensing, the node may transmit a determination result of whether or not the QoS required for sensing is satisfied, to the SF. The node may request change information of a desired control indicator, such as change of a transmission base station or change of a reception UE, from the SF, for example. By using the determination result or the change information of a desired control indicator, the SF may perform more appropriate control, such as change of a transmission base station or change of a reception UE, to satisfy the QoS required for sensing, for example.

More than one QoSs required for sensing may be provided. A priority order may be given to the plurality of QoSs. For example, primary QoS and secondary QoS may be provided. When the QoS required for sensing with high priority is not satisfied, control may be performed to satisfy the QoS required for sensing with the next priority. For example, when the SF determines that the primary QoS is not satisfied, configuration is changed to the secondary QoS. In this way, even if sensing capability decreases due to poor environment, change can be made to QoS with low priority to thereby prevent sensing processing from stopping. The sensing processing can be continued with the QoS with low priority.

In this way, QoS required for sensing can be configured. Even when the QoS required for sensing is different from QoS required for communication, the sensing processing is executed to satisfy the QoS required for sensing. This enables the indicator such as a KPI required for sensing to be satisfied.

### Tenth Embodiment

In sensing, speed of a target and the like are requested as a sensing result in some cases. Also, tracking of the target is requested as sensing or a result of the sensing in some cases. In the present embodiment, a method of enabling such sensing will be disclosed.

Time information is associated with a sensing measurement result. The time information may be assigned to the sensing measurement result. A reception UE associates the time information with the measurement result. The time information may be a measurement time, a measurement period, a measurement start time, or a measurement end time of sensing measurement. The unit of the time information may be year, month, day, hour, or the like, or symbol, slot, subframe, radio frame, or the like. The time information may be associated with a sensing measurement result for each reception UE. The time information of a sensing measurement result in each reception UE can be obtained.

The reception UE may transmit, together with a sensing measurement result, time information associated with the measurement result, or a sensing measurement result assigned with time information, to an SF. The SF can receive the time information of the sensing measurement result from each reception UE.

When a plurality of sensing measurements are performed successively or periodically, a series of sensing measurement results may be used. As measurement time information of the series of sensing measurement results, the first measurement time information and sensing measurement time interval information for a series of sensing measurements may be associated, for example. In this way, sensing measurement results obtained successively or in short periodicity can be acquired in association with time information. Time information can be transmitted with a smaller amount of information than that of a case where measurement time information is associated with each measurement result of a series of sensing measurements.

In this way, time information can be associated with a sensing measurement result(s). By using a plurality of acquired sensing measurement results and time information, tracking of a target, such as derivation of speed of a sensing target and derivation of location change in time of the sensing target, is enabled, for example.

### Eleventh Embodiment

A UE used for sensing changes in location due to moving in some cases. In such a case, the UE sometimes cannot receive a sensing resource reflected in a target in some cases. The UE may no longer function as a reception UE, which may cause a problem of not being able to execute sensing in such a case.

In the present embodiment, a method for solving such a problem will be disclosed.

A sensing-related UE information provision request is periodically transmitted to an LMF. An NW node may periodically transmit the request to the LMF. The NW node may be a node configured to transmit a sensing-related UE information provision request to the LMF disclosed in the embodiment described above. The NW node may be a gateway, an AMF, an SF, or the like, for example. The NW node may be a transmission base station, a reception UE, or a base station serving a reception UE, for example. These NW nodes may perform transmission via the AMF, the SF, the gateway, or the like. The periodicity may be derived by the NW node by using information included in a sensing request.

The periodicity may be included in a sensing request. For example, an external apparatus may include the information in the sensing request, for transmission. The NW node may use the periodicity included in the sensing request, to periodically transmit the sensing-related UE information provision request to the LMF.

As another method, a sensing-related UE information provision request may be transmitted to an LMF with a certain condition as a trigger. As the certain condition, for example, when the RSRP of a sensing resource of a reception UE is equal to or smaller than (or smaller than) a certain threshold, a sensing-related UE information provision request may be transmitted to the LMF. This is not restrictive. Another index of a sensing measurement result, information related to a sensing result, or information related to QoS required for sensing may be used. The certain threshold may be configured for a node configured to transmit a sensing-related UE information provision request to the LMF on a trigger basis.

The certain threshold may be included in a sensing request. For example, an external apparatus may include the certain threshold in the sensing request, for transmission. An NW node may use the certain threshold included in the sensing request, to transmit a sensing-related UE information provision request to the LMF on a trigger basis.

As the certain condition, for example, when a base station with which a reception UE is connected is changed, a sensing-related UE information provision request may be transmitted to the LMF. For example, a base station which used to be connected with the reception UE before the change may transmit the sensing-related UE information provision request to the LMF, or a base station which is connected with the reception UE after the change may transmit the sensing-related UE information provision request to the LMF.

A reception UE may transmit sensing-related UE information provision request to an LMF periodically or with a certain condition as a trigger. As the certain condition, for example, when the reception UE is away from a sensing area, when the reception UE has moved for a certain distance or more, or when the reception UE has a speed equal to or faster than a certain speed, a sensing-related UE information provision request may be transmitted to the LMF. For example, this may be performed when the reception UE derives location management information. For example, a reception UE having location management information can derive a location relationship with a sensing area, determine a certain condition by using the location relationship, and notify the LMF of the request.

As the certain condition, for example, when a base station with which a reception UE is connected is changed, a sensing-related UE information provision request may be transmitted to the LMF. As the certain condition, for example, when a reception UE is not connected with a base station, for example, when the reception UE is in RRC_Idle or RRC_Inactive, the reception UE may transmit a sensing-related UE information provision request to the LMF when a base station configured to receive notification information is changed. The reception UE may transmit, after having established RRC connection with the base station, a sensing-related UE information provision request to the LMF. The reception UE may transmit a sensing-related UE information provision request to the LMF when the certain condition is satisfied.

This sensing-related UE information provision request may include reason information. The reason information may be information related to a certain condition having triggered the sensing-related UE information provision request, for example.

In this way, sensing-related UE information can be updated periodically or with a certain condition as a trigger. Based on updated sensing-related UE information, the reception UE may be updated.

Another method will be disclosed. An LMF determines change of a sensing-related UE. The LMF transmits changed sensing-related UE information to an NW node. The NW node may be a node configured to transmit a sensing-related UE information provision request to the LMF disclosed in the embodiment described above. For example, the NW node may be a gateway, an AMF, an SF, or the like. The NW node may be a transmission base station, a reception UE, or a base station serving a reception UE, for example. These NW nodes may perform transmission via the AMF, the SF, the gateway, or the like.

The LMF has location management information of a UE. The location management information is location information, speed information, or the like. For example, when one of sensing-related UEs moves away from a sensing area, the LMF excludes the UE from the sensing-related UEs. When another UE enters a sensing area, the LMF includes the UE in the sensing-related UEs. For example, when a UE has moved for a certain distance or more, the LMF excludes the UE from the sensing-related UEs. For example, when a UE reaches a certain speed or more, the LMF excludes the UE from the sensing-related UEs. When another UE falls to a certain speed or below, the LMF includes the UE in the sensing-related UEs. Thus, by using the location management information of a UE, the LMF can determine change of a sensing-related UE.

In this way, the LMF can update sensing-related UE information. Based on updated sensing-related UE information, the reception UE may be updated. The LMF determines change of a sensing-related UE and transmits changed sensing-related UE information to an NW node, which eliminates the necessity of a sensing-related UE information provision request from the NW node. This can reduce a signaling amount and reduce signaling transmission determination processing in the NW node.

By using a method as that disclosed in the present embodiment, even when a UE to be used for sensing is no longer suitable for a reception UE, the UE to be used for sensing can be updated to another UE. By using the updated UE, sensing can be continued.

### Eleventh Embodiment, First Alteration

A base station to be used for sensing may move. A movable base station may be used for sensing. For example, a movable base station may be used as a sensing-related base station. For example, a movable base station may be used as a transmission base station.

When a movable base station is used for sensing, the base station cannot transmit a sensing resource to a target in some cases. The base station may no longer function as a transmission base station, which may cause a problem of not being able to execute sensing in such a case.

A method for solving such a problem will be disclosed.

A sensing-related base station information provision request is periodically transmitted to an LMF. An NW node may periodically transmit the request to the LMF. The NW node may be a node configured to transmit a sensing-related base station information provision request to the LMF disclosed in the embodiment described above. The NW node may be a gateway, an AMF, an SF, or the like, for example. The NW node may be a transmission base station, a reception UE, or a base station serving a reception UE, for example. These NW nodes may perform transmission via the AMF, the SF, the gateway, or the like. The periodicity may be derived by the NW node by using information included in a sensing request.

The periodicity may be included in a sensing request. For example, an external apparatus may include the information in the sensing request, for transmission. The NW node may use the periodicity included in the sensing request, to periodically transmit the sensing-related base station information provision request to the LMF.

As another method, a sensing-related base station information provision request may be transmitted to an LMF with a certain condition as a trigger. As the certain condition, for example, when the RSRP of a sensing resource of a reception UE is equal to or smaller than (or smaller than) a certain threshold, a sensing-related base station information provision request may be transmitted to the LMF. This is not restrictive. Another index of a sensing measurement result, information related to a sensing result, or information related to QoS required for sensing may be used. The certain threshold may be configured for a node configured to transmit a sensing-related base station information provision request to the LMF on a trigger basis.

The certain threshold may be included in a sensing request. For example, an external apparatus may include the certain threshold in the sensing request, for transmission. An NW node may use the certain threshold included in the sensing request, to transmit a sensing-related base station information provision request to the LMF on a trigger basis.

In this way, sensing-related base station information can be updated periodically or with a certain condition as a trigger. Based on updated sensing-related base station information, the transmission base station may be updated.

Another method will be disclosed. An LMF determines change of a sensing-related base station. The LMF transmits changed sensing-related base station information to an NW node. The NW node may be a node configured to transmit a sensing-related base station information provision request to the LMF disclosed in the embodiment described above. For example, the NW node may be a gateway, an AMF, an SF, or the like. The NW node may be a transmission base station, a reception UE, or a base station serving a reception UE, for example. These NW nodes may perform transmission via the AMF, the SF, the gateway, or the like.

The LMF has location management information of a base station. The location management information is location information, speed information, or the like. For example, when one of sensing-related base stations moves away from a sensing area, the LMF excludes the base station from the sensing-related base stations. When another base station enters a sensing area, the LMF includes the base station in the sensing-related UEs. For example, when a base station has moved for a certain distance or more, the LMF excludes the base station from the sensing-related base stations. For example, when a base station reaches a certain speed or more, the LMF excludes the base station from the sensing-related base stations. When another base station falls to a certain speed or below, the LMF includes the base station in the sensing-related base stations. Thus, by using the location management information of a base station, the LMF can determine change of a sensing-related UE.

In this way, the LMF can update sensing-related base station information. Based on updated sensing-related base station information, the transmission base station may be updated. The LMF determines change of a sensing-related base station and transmits changed sensing-related base station information to an NW node, which eliminates the necessity of a sensing-related base station information provision request from the NW node. This can reduce a signaling amount and reduce signaling transmission determination processing in the NW node.

By using a method as that disclosed in the present embodiment, even when a base station to be used for sensing is no longer suitable for a transmission base station, the base station to be used for sensing can be updated to another base station. By using the updated base station, sensing can be continued.

In the present Specification, a node may be a function. A node may be an entity.

In the present Specification, although there is a description of a base station, the base station may be a RAN node, unless otherwise specifically noted. The base station may be a RAN node TRP or may be a transmission point (TP). The RAN node may be a CU or a DU. The RAN node may be an IAB node. The RAN node may be a DU of an IAB node.

In the present Specification, a UE may be an IAB node. The UE may be a mobile termination (MT) of an IAB node.

In the communication system according to the present disclosure, one or a plurality of cells may be configured in one gNB. In the present disclosure, although there is a description of the gNB or the cell, it may be the gNB or may be the cell, unless otherwise specifically noted.

In the present disclosure, the gNB may be the MCG or the SCG.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

### Reference Signs List

Various aspects of the present disclosure are summarized below as supplementary notes.

### (Supplementary Note 1)

A communication system including:
a base station supporting a fifth generation radio access system; and
a communication terminal connected to the base station, wherein
in response to a sensing request from an external apparatus, nodes related to sensing are derived from at least one of the base station and the communication terminal, based on information related to a sensing area, and
among derived nodes, a transmission node for sensing configured to transmit a sensing resource and a reception node for sensing configured to receive the sensing resource are determined.

### (Supplementary Note 2)

The communication system according to Supplementary Note 1, wherein a sensing-related communication terminal, which is the communication terminal related to sensing, is derived as a node in the nodes related to sensing, based on the information related to the sensing area.

### (Supplementary Note 3)

The communication system according to Supplementary Note 1 or 2, wherein a sensing-related base station, which is the base station related to sensing, is derived as a node in the nodes related to sensing, based on the information related to the sensing area.

### (Supplementary Note 4)

The communication system according to Supplementary Note 3, wherein
the information related to the sensing area includes information for identifying the base station, and
an identified base station and a base station in a neighborhood of the identified base station are each derived as the sensing-related base station, based on the information for identifying the base station that is included in the information related to the sensing area.

### (Supplementary Note 5)

The communication system according to Supplementary Note 3, wherein
the information related to the sensing area includes information for identifying the communication terminal, and
a base station in a neighborhood of an identified communication terminal is derived as the sensing-related base station, based on the information for identifying the communication terminal, the information being included in the information related to the sensing area.

### (Supplementary Note 6)

The communication system according to any one of Supplementary Notes 1 to 5, further including:
a gateway configured to receive the sensing request;
a sensing function configured to manage sensing; and
a location management function configured to derive the nodes related to sensing.

### (Supplementary Note 7)

The communication system according to Supplementary Note 6, wherein
the sensing function is configured to
receive the sensing request from the gateway,
request, in response to the sensing request, information on the nodes related to the sensing from the location management function, and
determine the transmission node for sensing and the reception node for sensing, based on the information on the nodes related to the sensing acquired from the location management function.

### (Supplementary Note 8)

The communication system according to any one of Supplementary Notes 1 to 7, wherein a sensing result obtained by performing sensing by using the transmission node for sensing and the reception node for sensing is stored in association with information to be used for communication.

### (Supplementary Note 9)

The communication system according to any one of Supplementary Notes 1 to 8, wherein a measurement gap for sensing is configured for the reception node for sensing.

### (Supplementary Note 10)

The communication system according to any one of Supplementary Notes 1 to 9, wherein
a bandwidth part for sensing is configured for the reception node for sensing, and
the reception node for sensing is configured to receive the sensing resource within the bandwidth part for sensing.

### (Supplementary Note 11)

The communication system according to any one of Supplementary Notes 1 to 10, wherein information related to quality of service required for sensing is derived and transmitted to each of the transmission node for sensing and the reception node for sensing.

### (Supplementary Note 12)

The communication system according to any one of Supplementary Notes 1 to 11, wherein the reception node for sensing is configured to associate time information with a sensing measurement result.

### (Supplementary Note 13)

The communication system according to any one of Supplementary Notes 1 to 12, wherein
information on the nodes related to sensing is updated periodically or with a certain condition as a trigger, and
at least one of the transmission node for sensing and the reception node for sensing is changed based on information on the nodes related to sensing after update.

### (Supplementary Note 14)

The communication system according to any one of Supplementary Notes 1 to 12, further including
a location management function including location information on the communication terminal and configured to derive the nodes related to the sensing, wherein
the location management function is configured to determine whether or not any of the nodes related to sensing is changed, based on the location information of the communication terminal and the information related to the sensing area, and update, when any of the nodes related to sensing is changed, the information on the nodes related to sensing.

### Reference Signs List

- 202: Communication terminal apparatus (mobile terminal),
- 210: Communication system,
- 213, 240-1, 240-2, 750: Base station apparatus (NR base station, base station),
- 214: 5G core unit,
- 215: Central unit,
- 216: Distributed unit,
- 217: Control-plane central unit,
- 218: User-plane central unit,
- 219: TRP,
- 301, 403: Protocol processing unit,
- 302: Application unit,
- 304, 405: Encoder unit,
- 305, 406: Modulating unit,
- 306, 407: Frequency converting unit,
- 307-1 to 307-4, 408-1 to 408-4: Antenna,
- 308, 409: Demodulating unit,
- 309, 410: Decoder unit,
- 310, 411, 526: Control unit,
- 401: EPC communication unit,
- 402: Other base station communication unit,
- 412: 5GC communication unit,
- 521: Data network communication unit,
- 522: Base station communication unit,
- 523: User plane communication unit,
- 523-1: PDU processing unit,
- 523-2: Mobility anchoring unit,
- 525: Control plane control unit,
- 525-1: NAS security unit,
- 525-2: Idle state mobility management unit,
- 527: Session management unit,
- 527-1: PDU session control unit,
- 527-2: UE IP address assigning unit,
- 751-1 to 751-8: Beam,
- 752: Cell,
- 1100: Learning apparatus,
- 1110, 1210: Data acquisition unit,
- 1120: Model generation unit,
- 1121: Reward calculation unit,
- 1122: Function update unit,
- 1130: Learned model storage unit,
- 1200: Inference apparatus,
- 1220: Inference unit.

## Claims

1. A communication system comprising:
a base station supporting a fifth generation radio access system; and
a communication terminal connected to the base station, wherein
in response to a sensing request from an external apparatus, nodes related to sensing are derived from at least one of the base station and the communication terminal, based on information related to a sensing area, and
among derived nodes, a transmission node for sensing configured to transmit a sensing resource and a reception node for sensing configured to receive the sensing resource are determined.

2. The communication system according to claim 1, wherein a sensing-related communication terminal, which is the communication terminal related to sensing, is derived as a node in the nodes related to sensing, based on the information related to the sensing area.

3. The communication system according to claim 1, wherein a sensing-related base station, which is the base station related to sensing, is derived as a node in the nodes related to sensing, based on the information related to the sensing area.

4. The communication system according to claim 3, wherein
the information related to the sensing area includes information for identifying the base station, and
an identified base station and a base station in a neighborhood of the identified base station are each derived as the sensing-related base station, based on the information for identifying the base station that is included in the information related to the sensing area.

5. The communication system according to claim 3, wherein
the information related to the sensing area includes information for identifying the communication terminal, and
a base station in a neighborhood of an identified communication terminal is derived as the sensing-related base station, based on the information for identifying the communication terminal, the information being included in the information related to the sensing area.

6. The communication system according to claim 1, further comprising:
a gateway configured to receive the sensing request;
a sensing function configured to manage sensing; and
a location management function configured to derive the nodes related to sensing.

7. The communication system according to claim 6, wherein
the sensing function is configured to
receive the sensing request from the gateway,
request, in response to the sensing request, information on the nodes related to the sensing from the location management function, and
determine the transmission node for sensing and the reception node for sensing, based on the information on the nodes related to the sensing acquired from the location management function.

8. The communication system according to claim 1, wherein a sensing result obtained by performing sensing by using the transmission node for sensing and the reception node for sensing is stored in association with information to be used for communication.

9. The communication system according to claim 1, wherein a measurement gap for sensing is configured for the reception node for sensing.

10. The communication system according to claim 1, wherein
a bandwidth part for sensing is configured for the reception node for sensing, and
the reception node for sensing is configured to receive the sensing resource within the bandwidth part for sensing.

11. The communication system according to claim 1, wherein information related to quality of service required for sensing is derived and transmitted to each of the transmission node for sensing and the reception node for sensing.

12. The communication system according to claim 1, wherein the reception node for sensing is configured to associate time information with a sensing measurement result.

13. The communication system according to claim 1, wherein
information on the nodes related to sensing is updated periodically or with a certain condition as a trigger, and
at least one of the transmission node for sensing and the reception node for sensing is changed based on information on the nodes related to sensing after update.

14. The communication system according to claim 1, further comprising
a location management function including location information on the communication terminal and configured to derive the nodes related to the sensing, wherein
the location management function is configured to determine whether or not any of the nodes related to sensing is changed, based on the location information of the communication terminal and the information related to the sensing area, and update, when any of the nodes related to sensing is changed, the information on the nodes related to sensing.
